# EUROPÄISCHE PATENTSCHRIFT

(11) **EP 1 687 315 B1**
(45) Veröffentlichungstag und Bekanntmachung des Hinweises auf die Patenterteilung: **25.08.2010**
(21) Anmeldenummer: 04797688.1
(22) Anmeldetag: 06.11.2004
(51) Int. Cl.: C07F 7/08

(54) **SILYLIERTE CARBOXAMIDE**
SILYLATED CARBOXAMIDES
CARBOXAMIDES SILYLES

(30) Priorität: 21.11.2003 DE 10354607
(43) Veröffentlichungstag der Anmeldung: 09.08.2006
(73) Patentinhaber: Bayer CropScience AG, 40789 Monheim (DE)
(72) Erfinder: DUNKEL, Ralf, 69001 Lyon (FR); ELBE, Hans-Ludwig, 42329 Wuppertal (DE); HARTMANN, Benoit, 40764 Langenfeld (DE); KLAUSENER, Alexander, 50259 Pulheim (DE); GREUL, Jörg, Nico, 42799 Leichlingen (DE); WACHENDORFF-NEUMANN, Ulrike, 56566 Neuwied (DE); DAHMEN, Peter, 41470 Neuss (DE); KUCK, Karl-Heinz, 40764 Langenfeld (DE)
(86) Internationale Anmeldenummer: PCT/EP2004/012590
(87) Internationale Veröffentlichungsnummer: WO 2005/049624

(56) Entgegenhaltungen:
- EP-A- 0 538 231
- EP-A2- 0 545 099
- WO-A1-03/080628
- DATABASE CA [Online] CHEMICAL ABSTRACTS SERVICE, COLUMBUS, OHIO, US; COSTA, MIRCO ET AL: "Synthesis of 4H-3,1-Benzoxazines, Quinazolin-2-ones, and Quinolin-4-ones by Palladium-Catalyzed Oxidative Carbonylation of 2-Ethynylaniline Derivatives" XP002315416 gefunden im STN Database accession no. 2004:189014 & JOURNAL OF ORGANIC CHEMISTRY , 69(7), 2469-2477 CODEN: JOCEAH; ISSN: 0022-3263, 2004,
- DATABASE CA [Online] CHEMICAL ABSTRACTS SERVICE, COLUMBUS, OHIO, US; BARTOLI, GIUSEPPE ET AL: "A new approach to the synthesis of 2-substituted indoles: reaction of dimetallated ortho-trimethylsilylmethylanilides with esters" XP002315417 gefunden im STN Database accession no. 1990:423608 & TETRAHEDRON , 46(4), 1379-84 CODEN: TETRAB; ISSN: 0040-4020, 1990,
- DATABASE CA [Online] CHEMICAL ABSTRACTS SERVICE, COLUMBUS, OHIO, US; SAKAMOTO, TAKAO ET AL: "Condensed heteroaromatic ring systems. XII. Synthesis of indole derivatives from ethyl 2-bromocarbanilates" XP002315418 gefunden im STN Database accession no. 1988:75166 & CHEMICAL & PHARMACEUTICAL BULLETIN , 35(5), 1823-8 CODEN: CPBTAL; ISSN: 0009-2363, 1987,
- DATABASE CA [Online] CHEMICAL ABSTRACTS SERVICE, COLUMBUS, OHIO, US; HELLWINKEL, DIETER ET AL: "Carbanionically induced [1,3]-migrations of .pi.- and coordinatively unsaturated groups" XP002315419 gefunden im STN Database accession no. 1984:5549 & CHEMISCHE BERICHTE , 116(10), 3375-405 CODEN: CHBEAM; ISSN: 0009-2940, 1983,
- LUKEVICS E.: "Biolgical Activity of Nitrogen containing Organosilicon Compounds" NOBEL SYMP., Nr. 40, 1978, Seiten 435-445, XP002312113

## Beschreibung

Die vorliegende Erfindung betrifft neue silylierte Carboxamide, mehrere Verfahren zu deren Herstellung und deren Verwendung zur Bekämpfung von unerwünschten Mikroorganismen.

Es ist bereits bekannt, dass zahlreiche Carboxamide fungizide Eigenschaften besitzen (vgl. z.B. WO 03/080628, WO 03/010149, EP-A 0 589 301, EP-A 0 545 099). *So beschreibt* WO-A 2003/080628 *siliziumenthaltende Phenylcarboxamide, die an der (Thio)-carbonylfunktion mit einem 5- oder 6-gliedrigen Heterozyklus substituiert sind und in para-Position zum Stickstoff des Anilins einen siliziumhaltigen Substitutenten aufweisen. Diese Verbindungen weisen mikrobizide, insbesondere fungizide Wirkung auf.* EP-A 545099 *beschreibt die Verwendung von sowie eine Vielzahl von anilinhaltigen Carboxamide, die an der Carbonylfunktion mit Phenyl und heterozyklischen Verbindungen substituiert sind und ebenfalls am Anilin weitere Subsitutenten aufweisen können. Auch diese Verbindungen sind zur Bekämpfung von phytopathogenen Pilzen, insbesondere von Botrytis geeignet.* EP-A 0536 231 *beschreibt eine Vielzahl von Verbindungen, darunter auch phenylhaltige Carboxamide, die mit heterozyklischen Verbindungen an der Carbonylfunktion besetzt sind, die zur Bekämpfung von Gaeumannomyces graminis geignet sind.* Die Wirksamkeit dieser Stoffe ist gut, lässt aber in manchen Fällen, z.B. bei niedrigen Aufwandmengen zu wünschen übrig.

Es wurden nun neue silylierte Carboxamide der Formel (I) 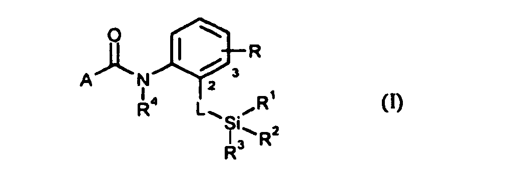 gefunden, in welcher
- R: für Wasserstoff, Fluor, Chlor, Methyl, iso-Propyl, Methylthio oder Trifluormethyl steht,
- L: für eine direkte Bindung oder für jeweils gegebenenfalls substituiertes geradkettiges oder verzweigtes Alkylen (Alkandiyl), Alkenylen (Alkendiyl) oder Alkinylen (Alkindiyl) steht,
- R¹ und R²: unabhängig voneinander für Wasserstoff, C₁-C₈-Alkyl, C₁-C₈-Alkoxy, C₁-C₄-Alk_{O}xy-C₁- C₄-alkyl, C₁-C₄-Alkylthio-C₁-C₄-alkyl oder C₁-C₆-Halogenalkyl stehen,
- R³: für Wasserstoff, C₁-C₈-Alkyl, C₁-C₈-Alkoxy, C₁-C₄-Alkoxy-C₁-C₄-alkyl, C₁-C₄-Alkylthio-C₁- C₄-alkyl, C₂-C₈-Alkenyl, C₂-C₈-Alkinyl, C₁-C₆-Halogenalkyl, C₂-C₆-Halogenalkenyl, C₂-C₆- Halogenalkinyl, C₃-C₆-Cycloalkyl, oder für jeweils gegebenenfalls substituiertes Phenyl oder Phenylalkyl steht,
- R⁴: für Wasserstoff, C₁-C₈-Alkyl, C₁-C₆-Alkylsulfinyl, C₁-C₆-Alkylsulfonyl, C₁-C₄-Alkoxy-C₁-C₄- alkyl, C₃-C₈-Cycloalkyl; C₁-C₆-Halogenalkyl, C₁-C₄-Halogenalkylthio, C₁-C₄-Halogenalkyl- sulfinyl, C₁-C₄-Halogenalkylsulfonyl, Halogen-C₁-C₄-alkoxy-C₁-C₄-alkyl, C₃-C₈-Halogen- cycloalkyl mit jeweils 1 bis 9 Fluor-, Chlor- und/oder Bromatomen; Formyl, Formyl-C₁-C₃- alkyl, (C₁-C₃-Alkyl)carbonyl-C₁-C₃-alkyl, (C₁-C₃-Alkoxy)carbonyl-C₁-C₃-alkyl; Halogen-(C₁- C₃-alkyl)carbonyl-C₁-C₃-alkyl, Halogen-(C₁-C₃-alkoxy)carbonyl-C₁-C₃-alkyl mit jeweils 1 bis 13 Fluor-, Chlor- und/oder Bromatomen; (C₁-C₈-Alkyl)carbonyl, (C₁-C₈-Alkoxy)carbonyl, (C₁-C₄-Alkoxy-C₁-C₄-alkyl)carbonyl, (C₃- C₈-Cycloalkyl)carbonyl; (C₁-C₆-Halogenalkyl)carbonyl, (C₁-C₆-Halogenalkoxy)carbonyl, (Halogen-C₁-C₄-alkoxy-C₁-C₄-alkyl)carbonyl, (C₃-C₈-Halogencycloalkyl)carbonyl mit jeweils 1 bis 9 Fluor-, Chlor- und/oder Bromatomen; oder -C(=O)C(=O)R⁵, -CONR⁶R⁷ oder -CH₂NR⁸R⁹ steht,
- R⁵: für Wasserstoff, C₁-C₈-Alkyl, C₁-C₈-Alkoxy, C₁-C₄-Alkoxy-C₁-C₄-alkyl, C₃-C₈-Cycloalkyl; C₁-C₆-Halogenalkyl, C₁-C₆-Halogenalkoxy, Halogen-C₁-C₄-alkoxy-C₁-C₄-alkyl, C₃-C₈-Halo- gencycloalkyl mit jeweils 1 bis 9 Fluor-, Chlor- und/oder Bromatomen steht,
- R⁶ und R⁷: unabhängig voneinander jeweils für Wasserstoff, C₁-C₈-Alkyl, C₁-C₄-Alkoxy-C₁-C₄-alkyl, C₃-C₈-Cycloalkyl; C₁-C₈-Halogenalkyl, Halogen-C₁-C₄-alkoxy-C₁-C₄-alkyl, C₃-C₈-Halogen- cycloalkyl mit jeweils 1 bis 9 Fluor-, Chlor- und/oder Bromatomen stehen,
- R⁶ und R⁷: außerdem gemeinsam mit dem Stickstoffatom, an das sie gebunden sind, einen gegebenen- falls einfach oder mehrfach, gleich oder verschieden durch Halogen oder. C₁-C₄-Alkyl substituierten gesättigten Heterocyclus mit 5 bis 8 Ringatomen bilden, wobei der Hetero- cyclus I oder 2 weitere, nicht benachbarte Heteroatome aus der Reihe Sauerstoff, Schwefel oder NR¹⁰ enthalten kann,
- R⁸ und R⁹: unabhängig voneinander für Wasserstoff, C₁-C₈-Alkyl, C₃-C₈-Cycloalkyl; C₁-C₈-Halogen- alkyl, C₃-C₈-Halogencycloalkyl mit jeweils 1 bis 9 Fluor-, Chlor- und/oder Bromatomen stehen,
- R⁸ und R⁹: außerdem gemeinsam mit dem Stickstoffatom, an das sie gebunden sind, einen gegebenen- falls einfach oder mehrfach, gleich oder verschieden durch Halogen oder C₁-C₄-Alkyl substituierten gesättigten Heterocyclus mit 5 bis 8 Ringatomen bilden, wobei der Hetero- cyclus 1 oder 2 weitere, nicht benachbarte Heteroatome aus der Reihe Sauerstoff, Schwefel oder NR¹⁰ enthalten kann,
- R¹⁰: für Wasserstoff oder C₁-C₆-Alkyl steht,
- A: für den Rest der Formel (A9)

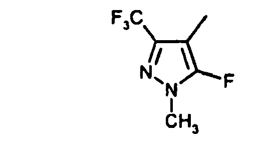

- (A9): steht,

Die erfindungsgemäßen Verbindungen können gegebenenfalls als Mischungen verschiedener möglicher isomerer Formen, insbesondere von Stereoisomeren, wie z. B. E- und Z-, threo- und erythro-, sowie optischen Isomeren, gegebenenfalls aber auch von Tautomeren vorliegen. Es werden sowohl die E- als auch die Z-Isomeren, wie auch die threo- und erythro-, sowie die optischen Isomeren, beliebige Mischungen dieser Isomeren, sowie die möglichen tautomeren Formen beansprucht.

Weiterhin wurde gefunden, dass man silylierte Carboxamide der Formel (I) erhält, indem man
a) Carbonsäure-Derivate der Formel (II) 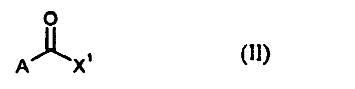 in welcher
   - X¹: für Halogen oder Hydroxy steht und
   - A: die oben angegebenen Bedeutungen hat,
   mit Aminen der Formel (III) 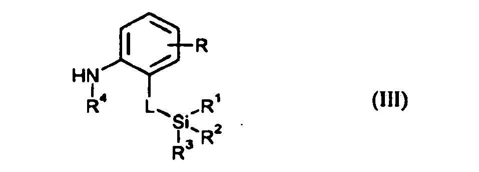 in welcher R, L, R¹, R², R³ und R⁴ die oben angegebenen Bedeutungen haben, gegebenenfalls in Gegenwart eines Katalysators, gegebenenfalls in Gegenwart eines Kondensationsmittels, gegebenenfalls in Gegenwart eines Säurebindemittels und gegebenenfalls in Gegenwart eines Verdünnungsmittels umsetzt,
   oder
b) silylierte Carboxamide der Formel (I-1) 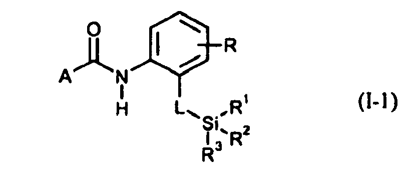 in welcher R, L, R¹, R², R³ und A die oben angegebenen Bedeutungen haben, mit Halogeniden der Formel (VIII)

   R^{4a}-X² (VIII)

   in welcher
   - X²: für Chlor, Brom oder Iod steht,
   - R^{4a}: für C₁-C₈-Alkyl, C₁-C₆-Alkylsulfinyl, C₁-C₆-Alkylsulfonyl, C₁-C₄-Alkoxy-C₁-C₄- alkyl, C₃-C₈-Cycloalkyl; C₁-C₆-Halogenalkyl, C₁-C₄-Halogenalkylthio, C₁-C₄-Halo- genalkylsulfinyl, C₁-C₄-Halogenalkylsulfonyl, Halogen-C₁-C₄-alkoxy-C₁-C₄-alkyl, C₃-C₈-Halogencycloalkyl mit jeweils 1 bis 9 Fluor-, Chlor- und/oder Bromatomen; Formyl, Formyl-C₁-C₃-alkyl, (C₁-C₃-Alkyl)carbonyl-C₁-C₃-alkyl, (C₁-C₃-Alkoxy)car- bonyl-C₁-C₃-alkyl; Halogen-(C₁-C₃-alkyl)carbonyl-C₁-C₃-alkyl, Halogen-(C₁-C₃-alk- oxy)carbonyl-C₁-C₃-alkyl mit jeweils 1 bis 13 Fluor-, Chlor- und/oder Bromatomen; (C₁-C₈-Alkyl)carbonyl, (C₁-C₈-Alkoxy)carbonyl, (C₁-C₄-Alkoxy-C₁-C₄-alkyl)carbo- nyl, (C₃-C₈-Cycloalkyl)carbonyl; (C₁-C₆-Halogenalkyl)carbonyl, (C₁-C₆-Halogenalk- oxy)carbonyl, (Halogen-C₁-C₄-alkoxy-C₁-C₄-alkyl)carbonyl, (C₃-C₈-Halogencyclo- alkyl)carbonyl mit jeweils 1 bis 9 Fluor-, Chlor- und/oder Bromatomen; oder -C(=O)C(=O)R⁵, -CONR⁶R⁷ oder -CH₂NR⁸R⁹ steht, wobei R⁵, R⁶, R⁷, R⁸ und R⁹ die oben angegebenen Bedeutungen haben,
   in Gegenwart einer Base und in Gegenwart eines Verdünnungsmittels umsetzt. Schließlich wurde gefunden, dass die neuen silylierten Carboxamide der Formel (I) sehr gute mikrobizide Eigenschaften besitzen und zur Bekämpfung unerwünschter Mikroorganismen sowohl im Pflanzenschutz als auch im Materialschutz verwendbar sind.

Die erfindungsgemäßen silylierten Carboxamide sind durch die Formel (I) allgemein definiert. Bevorzugte Restedefinitionen der vorstehenden und nachfolgend genannten Formeln sind im Folgenden angegeben. Diese Definitionen gelten für die Endprodukte der Formel (I) wie für alle Zwischenprodukte gleichermaßen.
- R: steht bevorzugt für Wasserstoff.
- R: steht außerdem bevorzugt für Fluor, wobei Fluor besonders bevorzugt in 4-, 5- oder 6- Position, ganz besonders bevorzug in 4- oder 6-Position, insbesondere in 4-Position des Anilidrestes steht [vgl. oben Formel (I)].
- R: steht außerdem bevorzugt für Chlor, wobei Chlor besonders bevorzugt in 5-Position des Anilidrestes steht [vgl. oben Formel (I)].
- R: steht außerdem bevorzugt für Methyl, wobei Methyl besonders bevorzugt in 3-Position des Anilidrestes steht [vgl. oben Formel (I)].
- R: steht außerdem bevorzugt für Trifluormethyl, wobei Trifluormethyl besonders bevorzugt in 4- oder 5-Position des Anilidrestes steht [vgl. oben Formel (I)].
- L: steht bevorzugt für eine direkte Bindung oder für gegebenenfalls durch Halogen substitu- iertes geradkettiges oder verzweigtes C₁-C₆-Alkylen, C₂-C₆-Alkenylen oder C₂-C₆-Alkinylen.
- L: steht besonders bevorzugt für eine direkte Bindung oder für -CH₂-, -(CH₂)₂-, -(CH₂)₃-, -CH(Me)-, -CH(Me)CH₂-, -CH₂CH(Me), -CH(Me)CH(Me)-, -C(Me₂)CH₂-, -CH(Me)-(CH₂)₂-, -CH(Me)-(CH₂)₃-, -CH=CH-, -C(Me)=CH- oder -C≡C.
- L: steht ganz besonders bevorzugt für -(CH₂)₂-, -(CH₂)₃-, -CH(Me), -CH(Me)CH₂-, -CH(Me)-(CH₂)₂-, -CH(Me)-(CH₂)₃-, -CH=H-, -C(Me)=CH- oder -C≡C-.
- R¹ und R²: stehen unabhängig voneinander bevorzugt für C₁-C₆-Alkyl, C₁-C₆-Alkoxy, C₁-C₃-Alkoxy- C₁-C₃-alkyl oder C₁-C₃-Alkylthio-C₁-C₃-alkyl.
- R¹ und R²: stehen unabhängig voneinander besonders bevorzugt für Methyl, Ethyl, Methoxy, Ethoxy, Methoxymethyl, Ethoxymethyl, Methoxyethyl, Ethoxyethyl, Methylthiomethyl, Ethylthio- methyl, Methylthioethyl oder Ethylthioethyl.
- R¹ und R²: stehen unabhängig voneinander ganz besonders bevorzugt für Methyl, Methoxy, Methoxymethyl oder Methylthiomethyl.
- R¹ und R²: stehen insbesondere bevorzugt jeweils für Methyl.
- R³: steht bevorzugt für C₁-C₆-Alkyl, C₁-C₆-Alkoxy, C₁-C₃-Alkoxy-C₁-C₃-alkyl, C₁-C₃-Alkylthio- C₁-C₃-alkyl, C₃-C₆-Cycloalkyl, Phenyl oder Benzyl.
- R³: steht besonders bevorzugt für Methyl, Ethyl, n- oder iso-Propyl, n-, sec-, iso- oder tert-Butyl, Methoxy, Ethoxy, n- oder iso-Propoxy, n-, sec-, iso- oder tert-Butoxy, Methoxymethyl, Ethoxymethyl, Methoxyethyl, Ethoxyethyl, Methylthiomethyl, Ethylthiomethyl, Methyl- thioethyl, Ethylthioethyl, Cyclopropyl, Phenyl oder Benzyl.
- R³: steht ganz besonders bevorzugt für Methyl, Ethyl, n- oder iso-Propyl, iso- oder tert-Butyl, Methoxy, iso-Propoxy, iso- oder tert-Butoxy, Methoxymethyl, Methylthiomethyl oder Phe- nyl.
- R³: steht insbesondere bevorzugt für Methyl, Ethyl, n- oder iso-Propyl, iso- oder tert-Butyl, Methoxy, iso-Propoxy, iso- oder tert-Butoxy.
- R³: steht hervorgehoben für Methyl.
- R⁴: steht bevorzugt für Wasserstoff, C₁-C₆-Alkyl, C₁-C₄-Alkylsulfinyl, C₁-C₄-Alkylsulfonyl, C₁- C₃-Alkoxy-C₁-C₃-alkyl, C₃-C₆-Cycloalkyl; C₁-C₄-Halogenalkyl, C₁-C₄-Halogenalkylthio, C₁- C₄-Halogenalkylsulfinyl, C₁-C₄-Halegenalkylsulfonyl, Halogen-C₁-C₃-alkoxy-C₁-C₃-alkyl, C₃-C₈-Halogencycloalkyl mit jeweils 1 bis 9 Fluor-, Chlor- und/oder Bromatomen; Formyl, Formyl-C₁-C₃-alkyl, (C₁-C₃-Alkyl)carbonyl-C₁-C₃-alkyl, (C₁-C₃-Alkoxy)carbonyl-C₁-C₃- alkyl; Halogen-(C₁-C₃-alkyl)carbonyl-C₁-C₃-alkyl, Halogen-(C₁-C₃-alkoxy)carbonyl-C₁-C₃-al- kyl mit jeweils 1 bis 13 Fluor-, Chlor- und/oder Bromatomen;
- R⁴: (C₁-C₆-Alkyl)carbonyl, (C₁-C₄-Alkoxy)carbonyl, (C₁-C₃-Alkoxy-C₁-C₃-alkyl)carbonyl, (C₃- C₆-Cycloalkyl)carbonyl; (C₁-C₄-Halogenalkyl)carbonyl, (C₁-C₄-Halogenalkoxy)carbonyl, (Halogen-C₁-C₃-alkoxy-C₁-C₃-alkyl)carbonyl, (C₃-C₆-Halogencycloalkyl)carbonyl mit jeweils 1 bis 9 Fluor-, Chlor- und/oder Bromatomen; oder -C(=O)C(=O)R⁵, -CONR⁶R⁷ oder -CH₂NR⁸R⁹. steht besonders bevorzugt für Wasserstoff, Methyl, Ethyl, n- oder iso-Propyl, n-, iso-, sec- oder tert-Butyl, Pentyl oder Hexyl, Methylsulfinyl, Ethylsulfinyl, n- oder iso-Propylsulfinyl, n-, iso-, sec- oder tert-Butylsulfinyl, Methylsulfonyl, Ethylsulfonyl, n- oder iso-Propyl- sulfonyl, n-, iso-, sec- oder tert-Butylsulfonyl, Methoxymethyl, Methoxyethyl, Ethoxymethyl, Ethoxyethyl, Cyclopropyl, Cyclopentyl, Cyclohexyl, Trifluormethyl, Trichlormethyl, Tri- fluorethyl, Difluormethylthio, Difluorchlormethylthio, Trifluormethylthio, Trifluormethyl- sulfinyl, Trifluormethylsulfonyl, Trifluormethoxymethyl; Formyl, -CH₂-CHO, -(CH₂)₂-CHO, -CH₂-CO-CH₃, -CH₂-CO-CH₂CH₃, -CH₂-CO-CH(CH₃)₂, -(CH₂)₂-CO-CH₃, -(CH₂)₂-CO-CH₂CH₃, -(CH₂)-CO-CH(CH₃)₂, -CH₂-CO₂CH₃, -CH₂-CO₂CH₂CH₃, -CH₂-CO₂CH(CH₃)₂, -(CH₂)₂-CO₂CH)₃, -(CH₂)₂-CO₂CH₂CH₃, -(CH₂)₂-CO₂CH(CH₃)₂, -CH₂-CO-CF₃, -CH₂-CO-CCl₃, -CH₂-CO-CH₂CF₃, -CH₂-CO-CH₂CCl₃, -(CH₂)₂-CO-CH₂CF₃, -(CH₂)₂-CO-CH₂CCl₃, -CH₂-CO₂CH₂CF₃, -CH₂-CO₂CF₂CF₃, -CH₂-CO₂CH₂CCl₃, -CH₂-CO₂CCl₂CCl₃, -(CH₂)₂-CO₂CH₂CF₃, -(CH₂)₂-CO₂CF₂CF₃, -(CH₂)₂CO₂CH₂CCl₃, -(CH₂)₂-CO₂CCl₂CCl₃; Methylcarbonyl, Ethylcarbonyl, n-Propylcarbonyl, iso-Propylcarbonyl, tert-Butylcarbonyl, Methoxycarbonyl, Ethoxycarbonyl, tert-Butoxycarbonyl, Cyclopropylcarbonyl; Trifluorme- thylcarbonyl, Trifluormethoxycarbonyl, oder -C(=O)C(=O)R⁵, -CONR⁶R⁷ oder -CH₂NR⁸R⁹.
- R⁴: steht ganz besonders bevorzugt für Wasserstoff, Methyl, Methoxymethyl, Formyl, -CH₂-CHO, -(CH₂)₂-CHO, -CH₂-CO-CH₃, -CH₂-CO-CH₂CH₃, -CH₂-CO-CH(CH₃)₂. -C(=O)CHO, -C(=O)C(=O)CH₃, -C(=O)C(=O)CH₂OCH₃, -C(=O)CO₂CH₃, -C(=CO)CH₂CH₂CH₃.
- R⁴: steht insbesondere bevorzugt für Wasserstoff.
- R⁵: steht bevorzugt für Wasserstoff, C₁-C₆-Alkyl, C₁-C₄-Alkoxy, C₁-C₃-Alkoxy-C₁-C₃-alkyl, C₃- C₆-Cycloalkyl; C₁-C₄-Halogenalkyl, C₁-C₄-Halogenalkoxy, Halogen-C₁-C₃-alkoxy-C₁-C₃- alkyl, C₃-C₆-Halogencycloalkyl mit jeweils 1 bis 9 Fluor-, Chlor- und/oder Bromatomen.
- R⁵: steht besonders bevorzugt für Wasserstoff, Methyl, Ethyl, n- oder iso-Propyl, tert-Butyl, Methoxy, Ethoxy, n- oder iso-Propoxy, tert-Butoxy, Methoxymethyl, Cyclopropyl, Trifluor- methyl, Trifluormethoxy.
- R⁶ und R⁷: stehen unabhängig voneinander bevorzugt für Wasserstoff, C₁-C₆-Alkyl, C₁-C₃-Alkoxy-C₁- C₃-alkyl, C₁-C₆-Cycloalkyl; C₁-C₄-Halogenalkyl, Halogen-C₁-C₃-alkoxy-C₁-C₃-alkyl, C₃-C₆- Halogencycloalkyl mit jeweils 1 bis 9 Fluor-, Chlor- und/oder Bromatomen.
- R⁶ und R⁷: bilden außerdem gemeinsam mit dem Stickstoffatom, an das sie gebunden sind, bevorzugt einen gegebenenfalls einfach bis vierfach, gleich oder verschieden durch Halogen oder C₁- C₄-Alkyl substituierten gesättigten Heterocyclus mit 5 oder 6 Ringatomen, wobei der Hetero- cyclus 1 oder 2 weitere, nicht benachbarte Heteroatome aus der Reihe Sauerstoff, Schwefel oder NR¹⁰ enthalten kann.
- R⁶ und R⁷: stehen unabhängig voneinander besonders bevorzugt für Wasserstoff, Methyl, Ethyl, n- oder iso-Propyl, n-, iso-, sec- oder tert-Butyl, Methoxymethyl, Methoxyethyl, Ethoxymethyl, Ethoxyethyl, Cyclopropyl, Cyclopentyl, Cyclohexyl; Trifluormethyl, Trichlormethyl, Trifluorethyl, Trifluormethoxymethyl.
- R⁶ und R⁷: bilden außerdem gemeinsam mit dem Stickstoffatom, an das sie gebunden sind, besonders bevorzugt einen gegebenenfalls einfach bis vierfach, gleich oder verschieden durch Fluor, Chlor, Brom oder Methyl substituierten gesättigten Heterocyclus aus der Reihe Morpholin, Thiomorpholin oder Piperazin, wobei das Piperazin am zweiten Stickstoffatom durch R¹⁰ substituiert sein kann.
- R⁸ und: R⁹ stehen unabhängig voneinander bevorzugt für Wasserstoff, C₁-C₆-Alkyl, C₃-C₆-Cycloalkyl; C₁-C₄-Halogenalkyl, C₃-C₆-Halogencycloalkyl mit jeweils 1 bis 9 Fluor-, Chlor- und/oder Bromatomen.
- R⁸ und R⁹: bilden außerdem gemeinsam mit dem Stickstoffatom, an das sie gebunden sind, bevorzugt einen gegebenenfalls einfach oder mehrfach, gleich oder verschieden durch Halogen oder C₁- C₄-Alkyl substituierten gesättigten Heterocyclus mit 5 oder 6 Ringatomen, wobei der Heterocyclus 1 oder 2 weitere, nicht benachbarte Heteroatome aus der Reihe Sauerstoff, Schwefel oder NR¹⁰ enthalten kann.
- R⁸ und R⁹: stehen unabhängig voneinander besonders bevorzugt für Wasserstoff, Methyl, Ethyl, n- oder iso-Propyl, n-, iso-, sec- oder tert-Butyl, Methoxymethyl, Methoxyethyl, Ethoxymethyl, Ethoxyethyl, Cyclopropyl, Cyclopentyl, Cyclohexyl; Trifluormethyl, Trichlormethyl, Trifluorethyl, Trifluormethoxymethyl.
- R⁸ und R⁹: bilden außerdem gemeinsam mit dem Stickstoffatom, an das sie gebunden sind, besonders bevorzugt einen gegebenenfalls einfach bis vierfach, gleich oder verschieden durch Fluor, Chlor, Brom oder Methyl substituierten gesättigten Heterocyclus aus der Reihe Morpholin, Thiomorpholin oder Piperazin, wobei das Piperazin am zweiten Stickstoffatom durch R¹⁰ substituiert sein kann.
- R¹⁰: steht bevorzugt für Wasserstoff oder C₁-C₄-Alkyl.
- R¹⁰: steht besonders bevorzugt für Wasserstoff, Methyl, Ethyl, n- oder iso-Propyl, n-, iso-, sec- oder tert-Butyl.

- R¹¹: steht bevorzugt für Wasserstoff, Fluor, Chlor, Brom, Iod, Hydroxy, Cyano, C₁-C₄-Alkyl, C₁- C₂-Halogenalkyl, C₁-C₂-Halogenalkoxy oder C₁-C₂-Halogenalkylthio mit jeweils 1 bis 5 Fluor, Chlor und/oder Bromatomen.
- R¹¹: steht besonders bevorzugt für Wasserstoff, Fluor, Chlor, Brom, Iod, Hydroxy, Cyano, Methyl, Ethyl, n-Propyl, iso-Propyl, n-Butyl, iso-Butyl, sec-Butyl, tert-Butyl, Difluormethyl, Trifluor- methyl, Difluorchlormethyl, Trichlormethyl, Trifluormethoxy, Difluormethoxy, Difluorchlor- methoxy, Trichlormethoxy, Trifluormethylthio, Difluonnethylthio, Difluorchlormethylthio oder Trichlormethylthio.
- R¹¹: steht ganz besonders bevorzugt für Wasserstoff, Fluor, Chlor, Brom, Iod, Methyl, Difluor- methyl, Trifluormethyl oder Trichlormethyl.
- R¹¹: steht insbesondere bevorzugt für Chlor, Brom, Iod, Methyl, Difluormethyl oder Trifluor- methyl.
- R¹²: steht bevorzugt für Iod.
- R¹²: steht außerdem bevorzugt für Chlor.
- R¹²: steht außerdem bevorzugt für Dichlormethyl.
- R¹³: steht bevorzugt für Methyl, Ethyl oder C₁-C₂-Halogenalkyl mit 1 bis 5 Fluor, Chlor und/oder Bromatomen.
- R¹³: steht besonders bevorzugt für Methyl Methyl, Trifluormethyl, Difluormethyl, Difluorchlor- methyl oder Trichlormethyl.
- R¹³: steht ganz besonders bevorzugt für Methyl, Trifluormethyl, Difluormethyl oder Trichlor- methyl.
- R¹⁴: steht bevorzugt für Methyl, Ethyl oder C₁-C₂-Halogenalkyl mit 1 bis 5 Fluor, Chlor und/oder Bromatomen.
- R¹⁴: steht besonders bevorzugt für Methyl, Ethyl, Trifluormethyl, Difluormethyl, Difluorchlor- methyl oder Trichlormethyl.
- R¹⁴: steht ganz besonders bevorzugt für Methyl, Trifluormethyl, Difluormethyl oder Trichlor- methyl.
- R¹⁴: steht insbesondere bevorzugt für Methyl oder Trifluormethyl.
- R¹⁵: steht bevorzugt für Wasserstoff, Fluor, Chlor, Brom, Methyl, Ethyl oder C₁-C₂-Halogenalkyl mit 1 bis 5 Fluor, Chlor und/oder Bromatomen.
- R¹⁵: steht besonders bevorzugt für Wasserstoff, Fluor, Chlor, Brom, Methyl oder Trifluormethyl.
- R¹⁶: steht bevorzugt für Fluor, Chlor, Brom, Iod, Hydroxy, C₁-C₄-Alkyl, Methoxy, Ethoxy, Methylthio, Ethylthio, Difluormethylthio, Trifluormethylthio, C₁-C₂-Halogenalkyl oder C₁- C₂-Halogenalkoxy mit jeweils 1 bis 5 Fluor, Chlor und/oder Bromatomen.
- R¹⁶: steht besonders bevorzugt für Fluor, Chlor, Brom, Iod, Methyl, Ethyl, n-Propyl, iso-Propyl, n- Butyl, iso-Butyl, sec-Butyl, tert-Butyl, Trifluormethyl, Difluormethyl, Difluorchlormethyl, Trichlormethyl.
- R¹⁶: steht ganz besonders bevorzugt für Fluor, Chlor, Brom, Iod, Methyl, Trifluormethyl, Difluormethyl oder Trichlormethyl.
- R¹⁷: steht bevorzugt für Methyl, Ethyl, n-Propyl oder iso-Propyl.
- R¹⁷: steht besonders bevorzugt Methyl oder Ethyl.
- X: steht bevorzugt für O (Sauerstoff).
- X: steht außerdem bevorzugt für S (Schwefel).
- R¹⁸: steht bevorzugt für Iod.
- R¹⁸: steht außerdem bevorzugt für Methyl.

Außerdem hervorgehoben sind Verbindungen der Formel (I-1) 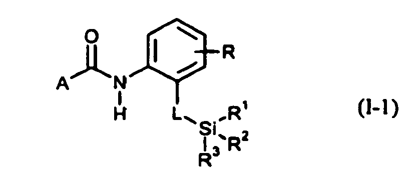 in welcher R, L, R¹, R², R³ und A die oben angegebenen Bedeutungen haben.

Außerdem hervorgehoben sind Verbindungen der Formel (I-2) 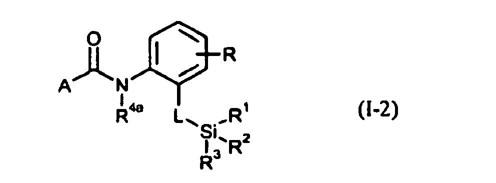 in welcher R, L, R¹, R², R³, R^{4a} und A die oben angegebenen Bedeutungen haben.
- R^{4a}: steht bevorzugt für C₁-C₆-Alkyl, C₁-C₄-Alkylsulfinyl, C₁-C₄-Alkylsulfonyl, C₁-C₃-Alkoxy-C₁- C₃-alkyl, C₃-C₆-Cycloalkyl; C₁-C₄-Halogenalkyl, C₁-C₄-Halogenalkylthio, C₁-C₄-Halogen- alkylsulfinyl, C₁-C₄-Halogenalkylsulfonyl, Halogen-C₁-C₃-alkoxy-C₁-C₃-alkyl, C₃-C₈-Halo- gencycloalkyl mit jeweils 1 bis 9 Fluor-, Chlor- und/oder Bromatomen; Formyl, Formyl-C₁- C₃-alkyl, (C₁-C₃-Alkyl)carbonyl-C₁-C₃-alkyl, (C₁-C₃-Alkoxy)carbonyl-C₁-C₃-alkyl; Halogen- (C₁-C₃-alkyl)carbonyl-C₁-C₃-alkyl, Halogen-(C₁-C₃-alkoxy)carbonyl-C₁-C₃-alkyl mit jeweils 1 bis 13 Fluor-, Chlor- und/oder Bromatomen; (C₁-C₆-Alkyl)carbonyl, (C₁-C₄-Alkoxy)carbonyl, (C₁-C₃-Alkoxy-C₁-C₃-alkyl)carbonyl, (C₃- C₆-Cycloalkyl)carbonyl; (C₁-C₄-Halogenalkyl)carbonyl, (C₁-C₄-Halogenalkoxy)carbonyl, (Halogen-C₁-C₃-alkoxy-C₁-C₃-alkyl)carbonyl, (C₃-C₆-Halogencycloalkyl)carbonyl mit jeweils 1 bis 9 Fluor-, Chlor- und/oder Bromatomen; oder -C(=O)C(=O)R⁵, -CONR⁶R⁷ oder -CH₂NR⁸R⁹, wobei R⁵, R⁶, R⁷, R⁸ und R⁹ die oben angegebenen Bedeutungen haben.
- R^{4a}: steht besonders bevorzugt für Methyl, Ethyl, n- oder iso-Propyl, n-, iso-, sec- oder tert-Butyl, Pentyl oder Hexyl, Methylsulfinyl, Ethylsulfinyl, n- oder iso-Propylsulfinyl, n-, iso-, sec- oder tert-Butylsulfinyl, Methylsulfonyl, Ethylsulfonyl, n- oder iso-Propylsulfonyl, n-, iso-, sec- oder tert-Butylsulfonyl, Methoxymethyl, Methoxyethyl, Ethoxymethyl, Ethoxyethyl, Cyclopropyl, Cyclopentyl, Cyclohexyl, Trifluormethyl, Trichlormethyl, Trifluorethyl, Diflu- ormethylthio, Difluorchlormethylthio, Trifluormethylthio, Trifluormethylsulfinyl, Trifluor- methylsulfonyl, Trifiuormethoxymethyl; Formyl, -CH₂-CHO, -(CH₂)₂-CHO, -CH₂-CO-CH₃, -CH₂-CO-CH₂CH₃, -CH₂-CO-CH(CH₃)₂, -(CH₂)₂-CO-CH₃, -(CH₂)₂-CO-CH₂CH₃, -(CH₂)₂-CO-CH(CH₃)₂, -CH₂-CO₂CH₃, -CH₂-CO₂CH₂CH₃, -CH₂-CO₂CH(CH₃)₂, -(CH₂)₂-CO₂CH₃, -(CH₂)₂-CO₂CH₂CH₃, -(CH₂)₂-CO₂CH(CH₃)₂, -CH₂-CO-CF₃, -CH₂-CO-CCl₃, -CH₂-CO-CH₂CF₃, -CH₂-CO-CH₂CCl₃, -(CH₂)₂-CO-CH₂CF₃, -(CH₂)₂-CO-CH₂CCl₃, -CH₂-CO₂CH₂CF₃, -CH₂-CO₂CF₂CF₃, -CH₂-CO₂CH₂CCl₃, -CH₂-CO₂CCl₂CCl₃, -(CH₂)₂-CO₂CH₂CF₃, -(CH₂)-CO₂CF₂CF₃, -(CH₂)₂-CO₂CH₂CCl₃, -(CH₂)₂-CO₂CCl₂CCl₃; Methylcarbonyl, Ethylcarbonyl, n-Propylcarbonyl, iso-Propylcarbonyl, tert-Butylcarbonyl, Methoxycarbonyl, Ethoxycarbonyl, tert-Butoxycarbonyl, Cyclopropylcarbonyl; Trifluorme- thylcarbonyl, Trifluormethoxycarbonyl, oder -C(=O)C(=O)R⁵, -CONR⁶R⁷ oder -CH₂NR⁸R⁹, wobei R⁵, R⁶, R⁷, R⁸ und R⁷ die oben angegebenen Bedeutungen haben.
- R^{4a}: steht ganz besonders bevorzugt für Methyl, Methoxymethyl, Formyl, -CH₂-CHO, -(CH₂)₂-CHO, -CH₂-CO-CH₃, -CH₂-CO-CH₂CH₃, -CH₂-CO-CH(CH₃)₂, -C(=O)CHO, -C(=O)C(=O)CH₃, -C(=O)C(=O)CH₂OCH), -C(=O)CO₂CH₃, -C(=O)CO₂CH₂CH₃.

Außerdem hervorgehoben sind Verbindungen der Formel (I-3) 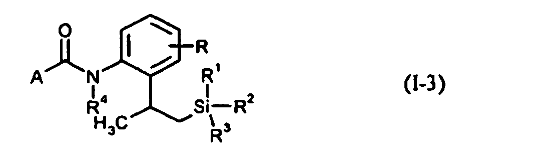 in welcher R, R¹, R², R³, R⁴ und A die oben angegebenen Bedeutungen haben.

Außerdem hervorgehoben sind Verbindungen der Formel (1-4) 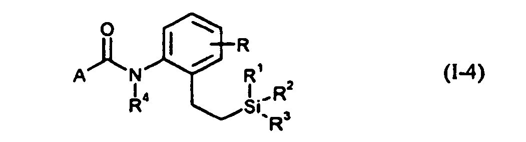 in welcher R, R¹, R², R³, R⁴ und A die oben angegebenen Bedeutungen haben.

Gesättigte oder ungesättigte Kohlenwasserstoffreste wie Alkyl oder Alkenyl können, auch in Verbindung mit Heteroatomen, wie zB. in Alkoxy, soweit möglich, jeweils geradkettig oder verzweigt sein.

Gegebenenfalls substituierte Reste können einfach oder mehrfach substituiert sein, wobei bei Mehrfachsubstitutionen die Substituenten gleich oder verschieden sein können.

Durch Halogen Substituierte Reste, wie z.B. Halogenalkyl, sind einfach oder mehrfach halogeniert. Bei mehrfacher Halogenierung können die Halogenatome gleich oder verschieden sein. Halogen steht dabei für Fluor, Chlor, Brom und Iod, insbesondere für Fluor, Chlor und Brom.

Die oben aufgeführten allgemeinen oder in Vorzugsbereichen aufgeführten Restedefinitionen bzw. Erläuterungen können zwischen den jeweiligen Bereichen und Vorzugsbereichen beliebig kombiniert werden. Sie gelten für die Endprodukte sowie for die Vor- und Zwischenprodukte entsprechend.

### Erläuterungen der Verfahren und Zwischenprodukte

### Verfahren (a)

Verwendet man beispielsweise 2-Chlorbenzoylchlorid und {2-[1-Methyl-2-(trimethylsilyl)ethyl]phenyl}amin als Ausgangsstoffe, so kann der Verlauf des erfindungsgemäßen Verfahrens (a) durch das folgende Formelschema veranschaulicht werden.

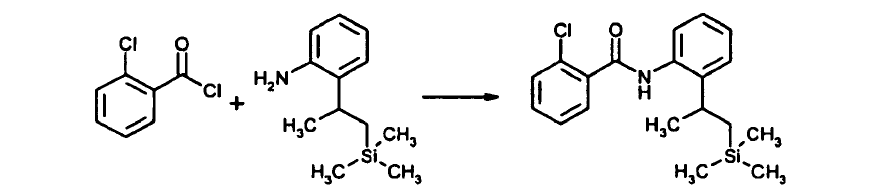

Die zur Durchführung des erfindungsgemäßen Verfahrens (a) als Ausgangsstoffe benötigten Carbonsäure-Derivate sind durch die Formel (II) allgemein definiert. In dieser Formel (II) hat A bevorzugt, besonders bevorzugt bzw. ganz besonders bevorzugt diejenigen Bedeutungen, die bereits im Zusammenhang mit der Beschreibung der erfindungsgemäßen Verbindungen der Formel (1) als bevorzugt, besonders bevorzugt bzw. ganz besonders bevorzugt für diese Reste angegeben wurden. X¹ steht bevorzugt für Chlor, Brom oder Hydroxy.

Carbonsäure-Derivate der Formel **(II)** sind bekannt und/oder können nach bekannten Methoden erhalten werden (vgl. WO 93/11117, EP-A 0 545 099, EP-A 0 589 301, EP-A 0 589 313 und DE-A 103 25 439.0).

Die zur Durchführung des erfindungsgemäßen Verfahrens (a) weiterhin als Ausgangsstoffe benötigten Amine sind durch die Formel (III) allgemein definiert. In dieser Formel (III) haben R, L, R¹, R², R³ und R⁴ bevorzugt, besonders bevorzugt bzw. ganz besonders bevorzugt diejenigen Bedeutungen, die bereits im Zusammenhang mit der Beschreibung der erfindungsgemäßen Verbindungen der Formel (I) als bevorzugt, besonders bevorzugt bzw. ganz besonders bevorzugt für diese Reste angegeben wurden.

Die Amine der Formel **(III)** sind bekannt und/oder können auf bekannte Weise erhalten werden (vgl. WO 03/080628 und die Herstellungsbeispiele).

Amine der Formel (III), in welcher R⁴ nicht für Wasserstoff steht, können beispielsweise erhalten werden, indem man Amine der Formel (III-a) 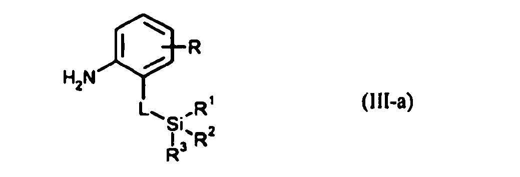 in welcher R, L, R¹, R² und R³ die oben angegebenen Bedeutungen haben, mit Halogeniden der Formel (VIII)

R^{4a}-X² (VIII)

in welcher X² und R^{4a} die oben angegebenen Bedeutungen haben, umsetzt [die Reaktionsbedingungen des erfindungsgemäßen Verfahrens (b) gelten entsprechend].

### Verfahren (b)

Verwendet man 2-Chlor-N-{2-[1-methyl-2-(trimethylsilyl)ethyl]phenyl}benzamid und Acetylchlorid als Ausgangsstoffe, so kann der Verlauf des erfindungsgemäßen Verfahrens (b) durch das folgende Formelschema veranschaulicht werden.

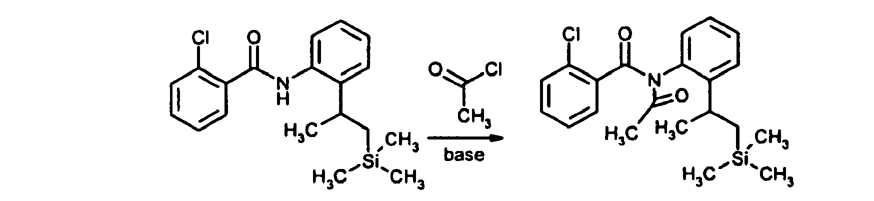

Die zur Durchführung des erfindungsgemäßen Verfahrens (b) als Ausgangsstoffe benötigten silylierten Carboxamide sind durch die Formel (I-1) allgemein definiert. In dieser Formel (I-1) haben R, L, R¹, R², R³, R⁴ und A bevorzugt, besonders bevorzugt bzw. ganz besonders bevorzugt diejenigen Bedeutungen, die bereits im Zusammenhang mit der Beschreibung der erfindungsgemäßen Verbindungen der Formel (1) als bevorzugt, besonders bevorzugt bzw. ganz besonders bevorzugt für diese Reste angegeben wurden.

Die Verbindungen der Formel (1-1) sind erfindungsgemäße Verbindungen und können nach dem Verfahren (a) hergestellt werden.

### Reaktionsbedingungen

Als Verdünnungsmittel zur Durchführung des erfindungsgemäßen Verfahrens (a) kommen alle inerten organischen Lösungsmittel in Betracht. Hierzu gehören vorzugsweise aliphatische, alicyclische oder aromatische Kohlenwasserstoffe, wie beispielsweise Petrolether, Hexan, Heptan, Cyclohexan, Methylcyclohexan, Benzol, Toluol, Xylol oder Decalin; halogenierte Kohlenwasserstoffe, wie beispielsweise Chlorbenzol, Dichlorbenzol, Dichlormethan, Chloroform, Tetrachlormethan, Dichlorethan oder Trichlorethan; Ether, wie Diethylether, Diisopropylether, Methyl-t-butylether, Methyl-tert-amylether, Dioxan, Tetrahydrofuran, 1,2-Dimethoxyethan, 1,2-Diethoxyethan oder Anisol; Nitrile, wie Acetonitril, Propionitril, n- oder i-Butyronitril oder Benzonitril; Amide, wie N,N-Dimethylformamid, N,N-Dimethylacetamid, N-Methylformanilid, N-Methylpyrrolidon oder Hexamethylphosphorsäuretriamid; deren Gemische mit Wasser oder reines Wasser.

Als Verdünnungsmittel zur Durchführung des erfindungsgemäßen Verfahrens (b) kommen alle inerten organischen Lösungsmittel in Betracht. Hierzu gehören vorzugsweise aliphatische, alicyclische oder aromatische Kohlenwasserstoffe, wie beispielsweise Petrolether, Hexan, Heptan, Cyclohexan, Methylcyclohexan, Benzol, Toluol, Xylol oder Decalin; halogenierte Kohlenwasserstoffe, wie beispielsweise Chlorbenzol, Dichlorbenzol, Dichlormethan, Chloroform, Tetrachlormethan, Dichlorethan oder Trichlorethan; Ether, wie Diethylether, Diisopropylether, Methyl-t-butylether, Methyl-tert-amylether, Dioxan, Tetrahydrofuran, 1,2-Dimethoxyethan, 1,2-Diethoxyethan oder Anisol; Amide, wie N,N-Dimethylformamid, N,N-Dimethylacetamid, N-Methylformanilid, N-Methylpyrrolidon oder Hexamethylphosphorsäuretriamid.

Das erfindungsgemäße Verfahren (a) wird gegebenenfalls in Gegenwart eines geeigneten Säureakzeptors durchgeführt. Als solche kommen alle üblichen anorganischen oder organischen Basen infrage. Hierzu gehören vorzugsweise Erdalkalimetall- oder Alkalimetallhydride, -hydroxide, -amide, -alkoholate, -acetate, -carbonate oder -hydrogencarbonate, wie beispielsweise Natriumhydrid, Natriumamid, Lithiumdiisopropylamid, Natriummethylat, Natriumethylat, Kalium-tert-butylat, Natriumacetat, Kaliumacetat, Calciumacetat, Natriumhydroxid, Kaliumhydroxid, Natriumcarbonat, Kaliumcarbonat, Kaliumhydrogencarbonat, Natriumhydrogencarbonat oder Ammoniumcarbonat, sowie tertiäre Amine, wie Trimethylamin, Triethylamin, Tributylamin, N,N-Dimethylanilin, N,N-Dimethylbenzylamin, Pyridin, N-Methylpiperidin, N-Methylmorpholin, N,N-Dimethylaminopyridin, Diazabicyclooctan (DABCO), Diazabicyclononen (DBN) oder Diazabicycloundecen (DBU).

Das erfindungsgemäße Verfahren (b) wird in Gegenwart einer geeigneten Base durchgeführt. Als solche kommen alle üblichen anorganischen oder organischen Basen infrage. Hierzu gehören vorzugsweise Erdalkalimetall- oder Alkalimetallhydride, -hydroxide, -amide, -alkoholate, -acetate, -carbonate oder -hydrogencarbonate, wie beispielsweise Natriumhydrid, Natriumamid, Lithiumdiisopropylamid, Natriummethylat, Natriumethylat, Kalium-tert-butylat, Natriumacetat, Kaliumacetat, Calciumacetat, Ammoniumacetat, Natriumhydroxid, Kaliumhydroxid, Ammoniumhydroxid, Natriumcarbonat, Kaliumcarbonat, Kaliumhydrogencarbonat, Natriumhydrogencarbonat oder Caesiumcarbonat; sowie tertiäre Amine, wie Trimethylamin, Triethylamin, Tributylamin, N,N-Dimethylanilin, N,N-Dimethyl-benzylamin, Pyridin, N-Methylpiperidin, N-Methylmorpholin, N,N-Dimethylaminopyridin, Diazabicyclooctan (DABCO), Diazabicyclononen (DBN) oder Diazabicycloundecen (DBU).

Das erfindungsgemäße Verfahren (a) wird gegebenenfalls in Gegenwart eines geeigneten Kondensationsmittels durchgeführt. Als solche kommen alle üblicherweise für derartige Amidierungsreaktionen verwendbaren Kondensationsmittel infrage. Beispielhaft genannt seien Säurehalogenidbildner wie Phosgen, Phosphortribromid, Phosphortrichlorid, Phosphorpentachlorid, Phosphoroxychlorid oder Thionylchlorid; Anhydridbildner wie Chlorameisensäureethylester, Chlorameisensäuremethylester, Chlorameisensäureisopropylester, Chlorameisensäureisobutylester oder Methansulfonylchlorid; Carbodiimide, wie N,N'-Dicyclohexylcarbodiimid (DCC) oder andere übliche Kondensationsmittel, wie Phosphorpentoxid, Polyphosphorsäure, N,N'-Carbonyldiimidazol, 2-Ethoxy-N-ethoxycarbonyl-1,2-dihydrochinolin (EEDQ), Triphenylphosphin/Tetrachlorkohlenstoff oder Brom-tripyrrolidinophosphonium-hexafluorophosphat.

Das erfindungsgemäße Verfahren (a) wird gegebenenfalls in Gegenwart eines Katalysators durchgeführt. Beispielsweise genannt seien 4-Dimethylaminopyridin, 1-Hydroxy-benzotriazol oder Dimethylformamid.

Die Reaktionstemperaturen können bei der Durchführung des erfindungsgemäßen Verfahrens (a) in einem größeren Bereich variiert werden. Im Allgemeinen arbeitet man bei Temperaturen von 0°C bis 150°C, vorzugsweise bei Temperaturen von 0°C bis 120°C, besonders bevorzugt bei Temperaturen von 10°C bis 80°C.

Die Reaktionstemperaturen können bei der Durchführung des erfindungsgemäßen Verfahrens (b) in einem größeren Bereich variiert werden. Im Allgemeinen arbeitet man bei Temperaturen von 0°C bis 1 50°C, vorzugsweise bei Temperaturen von 20°C bis 110°C.

Zur Durchführung des erfindungsgemäßen Verfahrens (a) zur Herstellung der Verbindungen der Formel (I) setzt man pro Mol des Carbonsäure-Derivates der Formel (II) im Allgemeinen 0,8 bis 15 Mol, vorzugsweise 0,8 bis 8 Mol an Amin der Formel (III) und 1 bis 3 Mol eines Säurebindemittels ein.

Zur Durchführung des erfindungsgemäßen Verfahrens (b) setzt man pro Mol an silyliertem Carboxamid der Formel (I-1) im Allgemeinen 0.2 bis 5 Mol, bevorzugt 0.5 bis 2 Mol eines Halogenids der Formel (VIII) ein.

Wenn nicht anders angegeben, werden alle erfindungsgemäßen Verfahren im Allgemeinen unter Normaldruck durchgeführt. Es ist jedoch auch möglich, unter erhöhtem oder vermindertem Druck - im Allgemeinen zwischen 0,1 bar und 10 bar-zu arbeiten.

Die erfindungsgemäßen Stoffe weisen eine starke mikrobizide Wirkung auf und können zur Bekämpfung von unerwünschten Mikroorganismen, wie Fungi und Bakterien, im Pflanzenschutz und im Materialschutz eingesetzt werden.

Fungizide lassen sich Pflanzenschutz zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz zur Bekämpfung von Pseudomonadaceae, Rhizobiaceae, Enterobacteriaceae, Corynebacteriaceae und Streptomycetaceae einsetzen.

Beispielhaft aber nicht begrenzend seien einige Erreger von pilzlichen und bakteriellen Erkrankungen, die unter die oben aufgezählten Oberbegriffe fallen, genannt:
Xanthomonas-Arten, wie beispielsweise Xanthomonas campestris pv. oryzae;
Pseudomonas-Arten, wie beispielsweise Pseudomonas syringae pv. lachrymans;
Erwinia-Arten, wie beispielsweise Erwinia amylovora;
Pythium-Arten, wie beispielsweise Pythium ultimum;
Phytophthora-Arten, wie beispielsweise Phytophthora infestans;
Pseudoperonospora-Arten, wie beispielsweise Pseudoperonospora humuli oder
Pseudoperonospora cubensis;
Plasmopara-Arten, wie beispielsweise Plasmopara viticola;
Bremia-Arten, wie beispielsweise Bremia lactucae;
Peronospora-Arten, wie beispielsweise Peronospora pisi oder P. brassicae;
Erysiphe-Arten, wie beispielsweise Erysiphe graminis;
Sphaerotheca-Arten, wie beispielsweise Sphaerotheca fuliginea;
Podosphaera-Arten, wie beispielsweise Podosphaera leucotricha;
Venturia-Arten, wie beispielsweise Venturia inaequalis;
Pyrenophora-Arten, wie beispielsweise Pyrenophora teres oder P. graminea
(Konidienform: Drechslera, Syn: Helminthosporium);
Cochliobolus-Arten, wie beispielsweise Cochliobolus sativus
(Konidienform: Drechslera, Syn: Helminthosporium);
Uromyces-Arten, wie beispielsweise Uromyces appendiculatus;
Puccinia-Arten, wie beispielsweise Puccinia recondita;
Sclerotinia-Arten, wie beispielsweise Sclerotinia sclerotiorum;
Tilletia-Arten, wie beispielsweise Tilletia caries;
Ustilago-Arten, wie beispielsweise Ustilago nuda oder Ustilago avenae;
Pellicularia-Arten, wie beispielsweise Pellicularia sasakii;
Pyricularia-Arten, wie beispielsweise Pyricularia oryzae;
Fusarium-Arten, wie beispielsweise Fusarium culmorum;
Botrytis-Arten, wie beispielsweise Botrytis cinerea;
Septoria-Arten, wie beispielsweise Septoria nodorum;
Leptosphaeria-Arten, wie beispielsweise Leptosphaeria nodorum;
Cercospora-Arten, wie beispielsweise Cercospora canescens;
Altemaria-Arten, wie beispielsweise Alternaria brassicae;
Pseudocercosporella-Arten, wie beispielsweise Pseudocercosporella herpotrichoides, Rhizoctonia-Arten, wie beispielsweise Rhizoctonia solani.

Die erfindungsgemäßen Wirkstoffe weisen auch eine starke stärkende Wirkung in Pflanzen auf. Sie eignen sich daher zur Mobilisierung pflanzeneigener Abwehrkräfte gegen Befall durch unerwünschte Mikroorganismen.

Unter pflanzenstärkenden (resistenzinduzierenden) Stoffen sind im vorliegenden Zusammenhang solche Substanzen zu verstehen, die in der Lage sind, das Abwehrsystein von Pflanzen so zu stimulieren, dass die behandelten Pflanzen bei nachfolgender Inokulation mit unerwünschten Mikroorganismen weitgehende Resistenz gegen diese Mikroorganismen entfalten.

Unter unerwünschten Mikroorganismen sind im vorliegenden Fall phytopathogene Pilze, Bakterien und Viren zu verstehen. Die erfindungsgemäßen Stoffe können also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im allgemeinen von 1 bis 10 Tage, vorzugsweise 1 bis 7 Tage nach der Behandlung der Pflanzen mit den Wirkstoffen.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von pflanz- und Saatgut, und des Bodens.

Dabei lassen sich die erfindungsgemäßen Wirkstoffe mit besonders gutem Erfolg zur Bekämpfung von Getreidekrankheiten, wie beispielsweise gegen Puccinia-Arten und von Krankheiten im Wein-, Obst- und Gemüseanbau, wie beispielsweise gegen Botrytis-, Venturia- oder Alternaria-Arten, einsetzen.

Die erfindungsgemäßen Wirkstoffe eignen sich auch zur Steigerung des Ernteertrages. Sie sind außerdem mindertoxisch und weisen eine gute Pflanzenverträglichkeit auf.

Die erfindungsgemäßen Wirkstoffe können gegebenenfalls in bestimmten Konzentrationen und Aufwandmengen auch als Herbizide, zur Beeinflussung des Pflanzenwachstums, sowie zur Bekämpfung von tierischen Schädlingen verwendet werden. Sie lassen sich gegebenenfalls auch als Zwischen- und Vorprodukte für die Synthese weiterer Wirkstoffe einsetzen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Im Materialschutz lassen sich die erfindungsgemäßen Stoffe zum Schutz von technischen Materialien gegen Befall und Zerstörung durch unerwünschte Mikroorganismen einsetzen.

Unter technischen Materialien sind im vorliegenden Zusammenhang nichtlebende Materialien zu verstehen, die für die Verwendung in der Technik zubereitet worden sind. Beispielsweise können technische Materialien, die durch erfindungsgemäße Wirkstoffe vor mikrobieller Veränderung oder Zerstörung geschützt werden sollen, Klebstoffe, Leime, Papier und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Anstrichmittel, Kühlschmiermittel und Wärmeübertragungsflüssigkeiten genannt, besonders bevorzugt Holz.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffe gegen Pilze, insbesondere Schimmelpilze, holzverfärbende und holzzerstörende Pilze (Basidiomyceten) sowie gegen Schleimorganismen und Algen.

Es seien beispielsweise Mikroorganismen der folgenden Gattungen genannt:
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viride,
Escherichia, wie Escherichia coli,
Pseudomonas, wie Pseudomonas aeruginosa,
Staphylococcus, wie Staphylococcus aureus.

Die Wirkstoffe können in Abhängigkeit von ihren jeweiligen physikalischen und/ oder chemischen Eigenschaften in die üblichen Formulierungen überführt werden, wie Lösungen, Emulsionen, Suspensionen, Pulver, Schäume, Pasten, Granulate, Aerosole, Feinstverkapseiungen in polymeren Stoffen und in Hüllmassen für Saatgut, sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/ der festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im Wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen infrage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen infrage: z.B. gebrochene und fraktionierte natürliche Gesteine wie Calcit, Bims, Marmor, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier und/oder schaumerzeugende Mittel kommen infrage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen infrage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

Als Mischpartner kommen zum Beispiel folgende Verbindungen infrage:
**Fungizide:**
   2-Phenylphenol; 8-Hydroxychinolinsulfat; Acibenzolar-S-methyl; Aldimorph; Amidoflumet; Ampropylfos; Ampropylfos-potassium; Andoprim; Anilazine; Azaconazole; Azoxystrobin; Benalaxyl; Benodanil; Benomyl; Benthiavalicarb-isopropyl; Benzamacril; Benismacril-isobutyl; Bilanafos; Binapacryl; Biphenyl; Bitertanol; Blasticidin-S; Bromuconazole; Bupirimate; Buthiobate; Butylamin; Calcium polysulfide; Capsimycin; Captafol; Captan; Carbendazim; Carboxin; Carpropamid; Carvone; Chinomethionat; Chlobenthiazone; Chlorfenazole; Chloroneb; Chlorothalonil; Chlozolinate; Clozylacon; Cyazofamid; Cyflufenamid; Cymoxanil; Cyproconazole; Cyprodinil; Cyprofuram; Dagger G; Debacarb; Dichlofluanid; Dichlone; Dichlorophen; Diclocymet; Diclomezine; Dicloran; Diethofencarb; Difenoconazole; Diflumetorim; Dimethirimol; Dimethomorph; Dimoxystrobin; Diniconazole; Diniconazole-M; Dinocap; Diphenylamine; Dipyrithione; Ditalimfos; Dithianon; Dodine; Drazoxolon; Edifenphos; Epoxiconazole; Ethaboxam; Ethirimol; Etridiazole; Famoxadone; Fenamidone; Fenapanil; Fenarimol; Fenbuconazole, Fenfuram; Fenhexamid; Fenitropan; Fenoxanil; Fenpiclonil; Fenpropidin; Fenpropimorph; Ferbam; Fluazinam; Flubenzimine; Fludioxonil; Flumetover, Flumorph; Fluoromide; Fluoxastrobin; Fluquinconazote; Flurprimidol; Flusilazole; Flusulfamide; Flutolanil; Flutriafol; Folpet; Fosetyl-Al; Fosetylsodium; Fuberidazole; Furalaxyl; Furametpyr; Furcarbanil; Furmecyclox; Guazatine; Hexachlorobenzene; Hexaconazole; Hymexazol; Imazalil; Imibenconazole; Iminoctadine triacetate; Iminoctadine tris-(albesil; lodocarb; Ipconazole; Iprobenfos; Iprodione; Iprovalicarb; Irumamycin; Isoprothiolane; Isovaledione; Kasugamycin; Kresoxim-methyl; Mancozeb; Maneb; Meferimzone; Mepanipyrim; Mepronil; Metalaxyl; Metalaxyl-M; Metconazole; Methasulfocarb; Methfuroxam; Metiram; Metominostrobin; Metsulfovax; Mildiomycin; Myclobutanil; Myclozolin; Natamycin; Nicobifen; Nitrothal-isopropyl; Noviflumuron; Nuarimol; Ofurace; Orysastrobin; Oxadixyl; Oxolinic acid; Oxpoconazole; Oxycarboxin; Oxyfenthiin; Paclobutrazol; Pefurazoate; Penconazole; Pencycuron; Phosdiphen; Phthalide; Picoxystrobin; Piperalin; Polyoxins; Polyoxorim; Probenazole; Prochloraz; Procymidone; Propamocarb; Propanosine-sodium; Propiconazole; Propineb; Proquinazid; Prothioconazole; Pyraclostrobin; Pyrazophos; Pyrifenox; Pyrimethanil; Pyroquilon; Pyroxyfur; Pyrrolnitrine; Quinconazole; Quinoxyfen; Quintozene; Simeconazole; Spiroxamine; Sulfur, Tebuconazole; Tecloftalam; Tecnazene; Tetcyclacis; Tetraconazole; Thiabendazole; Thicyofen; Thifluzamide; Thiophanate-methyl; Thiram; Tioxymid; Tolclofos-methyl; Tolylfluanid; Triadimefon; Triadimenol; Triazbutil; Triazoxide; Tricyclamide; Tricyclazole; Tridemorph; Trifloxystrobin; Triflumizole; Triforine; Triticonazole; Uniconazole; Validamycin A; Vinclozolin; Zineb; Ziram; Zoxamide; (2S)-N-[2-[4-[[3-(4-Chlorphenyl)-2-propinyl]oxy]-3-methoxyphenyl]-ethyl]-3-methyl-2-[(methylsulfonyl)amino]-butanamid; 1-(1-Naphthalenyl)-1H-pyrrol-2,5-dion; 2,3,5,6-Tetrachlor-4-(methylsulfonyl)-pyridin; 2-Amino-4-methyl-N-phenyl-5-thiazolcarboxamid; 2-Chlor-N-(2,3-dihydro-1,1,3-trimethyl-1H-inden-4-yl)-3-pyridincarboxamide; 3,4,5-Trichlor-2,6-pyridindicarbonitril; Actinovate; cis-1-(4-Chlorphenyl)-2-(1H-1,2,4-triazol-1-yl)-cycloheptanol; Methyl 1-(2,3-dihydro-2,2-dimethyl-1H-inden-1-yl)-1H-imidazol-5-carboxylat; Monokaliumcarbonat; N-(6-Methoxy-3-pyridinyl)-cyclopropancarboxamid; N-Butyl-8-(1,1-dimethylethyl)-1-oxaspiro[4.5]decan-3-amin; Natriumtetrathiocarbonat; sowie Kupfersalze und -zubereitungen, wie Bordeaux mixture; Kupferhydroxid; Kupfernaphthenat; Kupferoxychlorid; Kupfersulfat; Cufraneb; Kupferoxid; Mancopper; Oxine-copper.
**Bakterizide:**
   Bronopol, Dichlorophen, Nitrapyrin, Nickel-dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.
**Insektizide / Akarizide / Nematizide:**
   Abamectin, ABG-9008, Acephate, Acequinocyl, Acetamiprid, Acetoprole, Acrinathrin, AKD-1022, AKD-3059, AKD-3088, Alanycarb, Aldicarb, Aldoxycarb, Allethrin, Allethrin 1R-isomers, Alpha-Cypermethrin (Alphamethrin), Amidoflumet, Aminocarb, Amitraz, Avermectin, AZ-60541, Azadirachtin, Azamethiphos, Azinphos-methyl, Azinphos-ethyl, Azocyclotin, Bacillus popilliae, Bacillus sphaericus, Bacillus subtilis, Bacillus thuringiensis, Bacillus thuringiensis strain EG-2348, Bacillus thuringiensis strain GC-91, Bacillus thuringiensis strain NCTC-11821, Baculoviren, Beauveria bassiana, Beauveria tenella, Bendiocarb, Benfuracarb, Bensultap, Benzoximate, Beta-Cyfluthrin, Beta-Cypermethrin, Bifenazate, Bifenthrin, Binapacryl, Bioallethrin, Bioallethrin-S-cyclopentyl-isomer, Bioethanomethrin, Biopermethrin, Bioresmethrin, Bistrifluron, BPMC, Brofenprox, Bromophosethyl, Bromopropylate, Bromfenvinfos (-methyl), BTG-504, BTG-505, Bufencarb, Buprofezin, Butathiofos, Butocarboxim, Butoxycarboxim, Butylpyridaben, Cadusafos, Camphechlor, Carbaryl, Carbofuran, Carbophenothion, Carbosulfan, Cartap, CGA-50439, Chinomethionat, Chlordane, Chlordimeform, Chloethocarb, Chlorethoxyfos, Chlorfenapyr, Chlorfenvinphos, Chlorfluazuron, Chlormephos, Chlorobenzilate, Chloropicrin, Chlorproxyfen, Chlorpyrifos-methyl, Chlorpyrifos (-ethyl), Chlovaporthrin, Chromafenozide, Cis-Cypermethrin, Cis-Resmethrin, Cis-Permethrin, Clocythrin, Cloethocarb, Clofentezine, Clothianidin, Clothiazoben, Codlemone, Coumaphos, Cyanofenphos, Cyanophos, Cycloprene, Cycloprothrin, Cydia pomonella, Cyfluthrin, Cyhalothrin, Cyhexatin, Cypermethrin, Cyphenothrin (1R-trans-isomer), Cyromazine, DDT, Deltamethrin, Demeton-S-methyl, Demeton-S-methylsulphon, Diafenthiuron, Dialifos, Diazinon, Dichlofenthion, Dichlorvos, Dicofol, Dicrotophos, Dicyclanil, Diflubenzuron, Dimethoate, Dimethylvinphos, Dinobuton, Dinocap, Dinotefuran, Diofenolan, Disulfoton, Docusat-sodium, Dofenapyn, DOWCO-439, Eflusilanate, Emamectin, Emamectin-benzoate, Empenthrin (IR-isomer), Endosulfan, Entomopthora spp., EPN, Esfenvalerate, Ethiofencarb, Ethiprole, Ethion, Ethoprophos, Etofenprox, Etoxazole, Etrimfos, Famphur, Fenamiphos, Fenazaquin, Fenbutatin oxide, Fenfluthrin, Fenitrothion, Fenobucarb, Fenothiocarb, Fenoxacrim, Fenoxycarb, Fenpropathrin, Fenpyrad, Fenpyrithrin, Fenpyroximate, Fensulfothion, Fenthion, Fentrifanil, Fenvalerate, Fipronil, Flonicamid, Fluacrypyrim, Fluazuron, Flubenzimine, Flubrocythrinate, Flucycloxuron, Flucythrinate, Flufenerim, Flufenoxuron, Flufenprox, Flumethrin, Flupyrazofos, Flutenzin (Flufenzine), Fluvalinate, Fonofos, Formetanate, Formothion, Fosmethilan, Fosthiazate, Fubfenprox (Fluproxyfen), Furathiocarb, Gamma-HCH, Gossyplure, Grandlure, Granuloseviren, Halfenprox, Halofenozide, HCH, HCN-801, Heptenophos, Hexaflumuron, Hexythiazox, Hydramethylnone, Hydroprene, IKA-2002, Imidacloprid, Imiprothrin, Indoxacarb, Iodofenphos, Iprobenfos, Isazofos, Isofenphos, Isoprocarb, Isoxathion, Ivermectin, Japonilure, Kadethrin, Kernpolyederviren, Kinoprene, Lambda-Cyhalothrin, Lindane, Lufenuron, Malathion, Mecarbam, Mesulfenfos, Metaldehyd, Metam-sodium, Methacrifos, Methamidophos, Metharhizium anisopliae, Metharhizium flavoviride, Methidathion, Methiocarb, Methomyl, Methoprene, Methoxychlor, Methoxyfenozide, Metolcarb, Metoxadiazone, Mevinphos, Milbemectin, Milbemycin, MKI-245, MON-45700, Monocrotophos, Moxidectin, MTI-800, Naled, NC-104, NC-170, NC-184, NC-194, NC-196, Niclosamide, Nicotine, Nitenpyram, Nithiazine, NNI-0001, NNI-0101, NNI-0250, NNI-9768, Novaluron, Noviflumuron, OK-5101, OK-5201, OK-9601, OK-9602, OK-9701, OK-9802, Omethoate, Oxamyl, Oxydemeton-methyl, Paecilomyces fumosoroseus, Parathion-methyl, Parathion (-ethyl), Permethrin (cis-, trans-), Petroleum, PH-6045, Phenothrin (1R-trans isomer), Phenthoate, Phorate, Phosalone, Phosmet, Phosphamidon, Phosphocarb, Phoxim, Piperonyl butoxide, Pirimicarb, Pirimiphos-methyl, Pirimiphos-ethyl, Prallethrin, Profenofos, Promecarb, Propaphos, Propargite, Propetamphos, Propoxur, Prothiofos, Prothoate, Protrifenbute, Pymetrozine, Pyraclofos, Pyresmethrin, Pyrethrum, Pyridaben, Pyridalyl, Pyridaphenthion, Pyridathion, Pyrimidifen, Pyriproxyfen, Quinalphos, Resmethrin, RH-5849, Ribavirin, RU-12457, RU-15525, S-421, S-1833, Salithion, Sebufos, SI-0009, Silafluofen, Spinosad, Spirodiclofen, Spiromesifen, Sulfluramid, Sulfotep, Sulprofos, SZI-121, Tau-Fluvalinate, Tebufenozide, Tebufenpyrad, Tebupirimfos, Teflubenzuron, Tefluthrin, Temephos, Temivinphos, Terbam, Terbufos, Tetrachlorvinphos, Tetradifon, Tetramethrin, Tetramethrin (1R-isomer), Tetrasul, Theta-Cypermethrin, Thiacloprid, Thiamethoxam, Thiapronil, Thiatriphos, Thiocyclam hydrogen oxalate, Thiodicarb, Thiofanox, Thiometon, Thiosultap-sodium, Thuringiensin, Tolfenpyrad, Tralocythrin, Tralomethrin, Transfluthrin, Triarathene, Triazamate, Triazophos, Triazuron, Trichlophenidine, Trichlorfon, Triflumuron, Trimethacarb, Vamidothion, Vaniliprole, Verbutin, Verticillium lecanii, WL-108477, WL-40027, YI-5201, YI-5301, YI-5302, XMC, Xylylcarb, ZA-3274, Zeta-Cypermethrin, Zolaprofos, ZXI-8901, die Verbindung 3-Methylphenyl-propylcarbamat (Tsumacide Z), die Verbindung 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO-96/37494, WO-98/25923), sowie Präparate, welche insektizid wirksame Pflanzenextrakte, Nematoden, Pilze oder Viren enthalten.

Auch eine Mischung mit anderen bekannten Wirkstoffen, wie Herbiziden oder mit Düngemitteln und Wachstumsregulatoren, Safener bzw. Semiochemicals ist möglich.

Darüber hinaus weisen die erfindungsgemäßen Verbindungen der Formel (I) auch sehr gute antimykotische Wirkungen auf. Sie besitzen ein sehr breites antimykotisches Wirkungsspektrum, insbesondere gegen Dermatophyten und Sprosspilze, Schimmel und diphasische Pilze (z.B. gegen Candida-Spezies wie Candida albicans, Candida glabrata) sowie Epidermophyton floccosum, Aspergillus-Spezies wie Aspergillus niger und Aspergillus fumigatus, Trichophyton-Spezies wie Trichophyton mentagrophytes, Microsporon-Spezies wie Microsporon canis und audouinii. Die Aufzählung dieser Pilze stellt keinesfalls eine Beschränkung des erfassbaren mykotischen Spektrums dar, sondern hat nur erläuternden Charakter.

Die Wirkstoffe können als solche, in Form ihrer Formulierungen oder den daraus bereiteten Anwendungsformen, wie gebrauchsfertige Lösungen, Suspensionen, Spritzpulver, Pasten, lösliche Pulver, Stäubemittel und Granulate angewendet werden. Die Anwendung geschieht in üblicher Weise, z.B. durch Gießen, Verspritzen, Versprühen, Verstreuen, Verstäuben, Verschäumen, Bestreichen usw. Es ist feiner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Beim Einsatz der erfindungsgemäßen Wirkstoffe als Fungizide können die Aufwandmengen je nach Applikationsart innerhalb eines größeren Bereiches variiert werden. Bei der Behandlung von Pflanzenteilen liegen die Aufwandmengen an Wirkstoff im allgemeinen zwischen 0,1 und 10.000 g/ha, vorzugsweise zwischen 10 und 1.000 g/ha. Bei der Saatgutbehandlung liegen die Aufwandmengen an Wirkstoff im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoff im allgemeinen zwischen 0,1 und 10.000 g/ha, vorzugsweise zwischen 1 und 5.000 g/ha.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Rassen, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Mais, Soja, Kartoffel. Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CrylA(a), CrylA(b), CrylA(c), CryllA, CrylllA, CrylllB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, z.B. Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucoton® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den Verbindungen der allgemeinen Formel (I) bzw. den erfindungsgemäßen Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Verbindungen bzw. Mischungen.

Die Herstellung und die Verwendung der erfindungsgemäßen Wirkstoffe geht aus den folgenden Beispielen hervor.

### Herstellungsbeispiele

**Tabelle 1**

| | | | | | | | | |
|---|---|---|---|---|---|---|---|---|
| 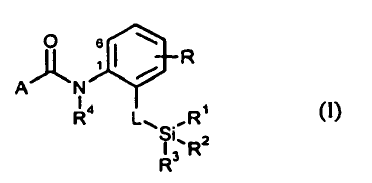 | | | | | | | | |

| Bsp. | R | L | R¹ | R² | R³ | R⁴ | A | logP |
|---|---|---|---|---|---|---|---|---|
| 10 | H | *-CH₂-CH₂-# | CH₃ | CH₃ | CH₃ | H | 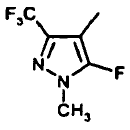 | 4.19 |

Die mit Stern (*) markierte Bindung ist mit dem den Anilinrest verknüpft, die mit Raute (#) markierte Bindung mit dem Silicium-Substituenten verbunden.

### Herstellung von Ausgangsstoffen der Formel (III)

Beispiel (III-1) 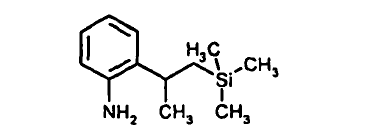 17.7 g Anilin (0.19 mol), 50 g Allyltrimethylsilan (0.44 mol), 1.5 g Aluminiumtrichlorid (0.01 mol) und 0.5 g Aluminiumpulver (0.02 mol) wurden gemischt und im Autoklaven für 10 h bei 255°C gerührt. Nach Abkühlen auf Raumtemperatur wurden zuerst 100 ml Toluol, dann 40 ml einer 40%igen NaOH-Lösung in Wasser und 100 ml Wasser zugegeben und 15 min bei 35°C gerührt. Nach dem Abkühlen wurde mit Toluol extrahiert, mit Wasser gewaschen, über Kaliumcarbonat getrocknet und das Lösungsmittel im Vakuum entfernt. Nach Destillation (55°C-60°C, 0.08 mbar) erhielt man 1.4 g 2-( 1-Methyl-2-trimethylsilyl-ethylrphenylamin [LogP (pH 2.3) = 3.05].

Beispiel (III-2
*Stufe 1* 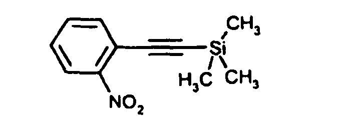 4 g (20 mmol) ortho-Bromnitrobenzol, 842 mg (1.2 mmol) Bis(triphenylphosphin)palladium(II)chlorid und 230 mg (1.2 mmol) Kupfer(I)iodid wurden in 40 ml Triethylamin unter Argon vorgelegt. Anschließend wurde bei Raumtemperatur innerhalb von 10 min 2.95 g (30 mmol) Trimethylsilylacetylen zugetropft und 2 Tage bei Raumtemperatur gerührt. Das Reaktionsgemisch wurde auf 50 ml Wasser gegossen, 3 mal mit je 50 ml Diethylether extrahiert, über Natriumsulfat getrocknet und eingedampfl. Nach säulenchromatographischer Reinigung über Kieselgel 60 (Laufmittel: Cyclohexan/Ethylacetat 3:1) wurden 4.2 g (96 % der Theorie) an Trimethyl-(2-nitro-phenylethinyl)-silan erhalten [LogP (pH 2.3) = 4.12].
*Stufe 2* 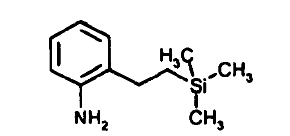 10.9 g (50 mmol) Trimethyl-(2-nitro-phenylethinyl)-silan wurden in 200 ml Methanol gelöst und 0.5 g Palladium-Kohle (5 %) zugegeben. Anschließend wurde im Autoklaven 12 h bei 4 bar hydriert. Nach Entfernung des Lösungsmittels und säulenchromatographischer Reinigung über Kieselgel 60 (Laufmittel: Methylenchlorid) wurden 4.1 g an 2-(2-Trimethylsilyl-ethyl)-phenylamin erhalten [LogP (pH 2.3) = 2.58].

Die Bestimmung der angegebenen logP-Werte erfolgte gemäß EEC-Directive 79/831 Annex V.A8 durch HPLC (High Performance Liquid Chromatography) an einer Phasenumkehrsäule (C 18). Temperatur: 43°C.

Eluenten für die Bestimmung im sauren Bereich (pH 2,3): 0,1 % wässrige Phosphorsäure, Acetonitril; linearer Gradient von 10 % Acetonitril bis 90 % Acetonitril.

Die Eichung erfolgte mit unverzweigten Alkan-2-onen (mit 3 bis 16 Kohlenstoffatomen), deren LogP-Werte bekannt sind (Bestimmung der LogP-Werte anhand der Retentionszeiten durch lineare Interpolation zwischen zwei aufeinanderfolgenden Alkanonen).

Die lambda-max-Werte wurden an Hand der UV-Spektren von 200 nm bis 400 nm in den Maxima der chromatographischen Signale ermittelt.

### Anwendungsbeispiele

Beispiel A
**Venturia-Test (Apfel) / protektiv**

| | | |
|---|---|---|
| Lösungsmittel : | 24,5 | Gewichtsteile Aceton |
| | 24,5 | Gewichtsteile Dimethylacetamid |
| Emulgator : | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wässrigen Konidiensuspension des Apfelschorferregers Venturia inaequalis inokuliert und verbleiben dann I Tag bei ca. 20°C und 100 % relativer Luftfeuchtigkeit in einer Inkubationskabine.

Die Pflanzen werden dann im Gewächshaus bei ca. 21°C und einer relativen Luftfeuchtigkeit von ca. 90 % aufgestellt.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

**Tabelle A**

| **Venturie-Test (ApfeI) / protektiv** | | |
|---|---|---|
| Wirkstoff Erfindungsgemäß | Aufwandmenge an Wirkstoff in g/ha | Wirkungsgrad in % |
| 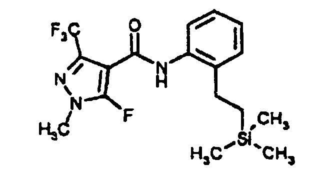 | 100 | 100 |

Beispiel B
**Sphaerotheca-Test (Gurke) / protektiv**

| | | |
|---|---|---|
| Lösungsmittel: | 49 | Gewichtsteile N,N-Dimethylformamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Gurkenpflanzen mit der Wirkstoffzubereitung in der angegebenen Aufwandmenge. I Tag nach der Behandlung werden die Pflanzen mit einer Sporensuspension von Sphaerotheca fuliginea inokuliert. Anschließend werden die Pflanzen in einem Gewächshaus bei 70 % relativer Luftfeuchtigkeit und einer Temperatur von 23°C aufgestellt.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Beispiel C
**Puccinia-Test (Weizen) / protektiv**

| | | |
|---|---|---|
| Lösungsmittel: | 50 | Gewichtsteile N,N-Dimethylacetamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer Konidiensuspension von Puccinia recondita besprüht. Die Pflanzen verbleiben 48 Stunden bei 20°C und 100 % relativer Luftfeuchtigkeit in einer Inkubationskabine.

Die Pflanzen werden dann in einem Gewächshaus bei einer Temperatur von ca. 20°C und einer relativen Luftfeuchtigkeit von 80 % aufgestellt, um die Entwicklung von Rostpusteln zu begünstigen.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

## Patentansprüche

1. Silylierte Carboxamide der Formel (I) 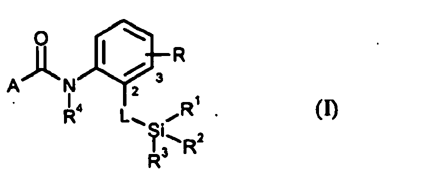 in welcher
R für Wasserstoff, Fluor, Chlor, Methyl, iso-Propyl, Methylthio oder Trifluormethyl steht,
L für eine direkte Bindung oder für jeweils gegebenenfalls substituiertes geradkettiges oder verzweigtes Alkylen (Alkandiyl), Alkenylen (Alkendiyl) oder Alkinylen (Alkin- diyl) steht,
R¹ und R² unabhängig voneinander für Wasserstoff, C₁-C₈-Alkyl, C₁-C₈-Alkoxy, C₁-C₄-Alkoxy- C₁-C₄-alkyl, C₁-C₄-Alkylthio-C₁-C₄-alkyl oder C₁-C₆-Halogenalkyl stehen,
R³ für Wasserstoff, C₁-C₈-Alkyl, C₁-C₈-Alkoxy, C₁-C₄-Alkoxy-C₁-C₄-alkyl, C₁-C₄-Alkyl- thio-C₁-C₄-alkyl, C₂-C₈-Alkenyl, C₂-C₈-Alkinyl, C₁-C₆-Halogenalkyl, C₂-C₆-Halo- genalkenyl, C₂-C₆-Halogenalkinyl, C₃-C₆-Cycloalkyl, oder für jeweils gegebenenfalls substituiertes Phenyl oder Phenylalkyl steht,
R⁴ für Wasserstoff, C₁-C₈-Alkyl, C₁-C₆-Alkylsulfinyl, C₁-C₆-Alkylsulfonyl, C₁-C₄-Alkoxy- C₁-C₄-alkyl, C₃-C₈-Cycloalkyl; C₁-C₆-Halogenalkyl, C₁-C₄-Halogenalkylthio, C₁-C₄-Ha- logenalkylsulfinyl, C₁-C₄-Halogenalkylsulfonyl, Halogen-C₁-C₄-alkoxy-C₁-C₄-alkyl, C₃- C₈-Halogencycloalkyl mit jeweils 1 bis 9 Fluor-, Chlor- und/ oder Bromatomen; Formyl, Formyl-C₁-C₃-alkyl, (C₁-C₃-Alkyl)carbonyl-C₁-C₃-alkyl, (C₁-C₃-Alkoxy)carbonyl-C₁- C₃-alkyl; Halogen-(C₁-C₃-alkyl)carbonyl-C₁-C₃-alkyl, Halogen-(C₁-C₃-alkoxyxarbonyl- C₁-C₃-alkyl mit jeweils 1 bis 13 Fluor-, Chlor- und/oder Bromatomen; (C₁-C₈-Alkyl)carbonyl, (C₁-C₈-Alkoxy)carbonyl, (C₁-C₄-Alkoxy-C₁-C₄-alkyl)carbonyl, (C₃-C₈-Cycloalkyl)carbonyl; (C₁-C₆-Halogenalkyl)carbonyl, (C₁-C₆-Halogenalkoxy)car- bonyl, (Halogen-C₁-C₄-alkoxy-C₁-C₄-alkyl)carbonyl, (C₃-C₈-Halogencyclo- alkyl)carbonyl mit jeweils 1 bis 9 Fluor-, Chlor- und/oder Bromatomen; oder -C(=O)C(=O)R⁵, -CONR⁶R⁷ oder -CH₂NR⁸R⁹ steht,
R⁵ für Wasserstoff, C₁-C₈-Alkyl, C₁-C₈-Alkoxy, C₁-C₄-Alkoxy-C₁-C₄-alkyl, C₃-C₈-Cycloal- kyl; C₁-C₆-Halogenalkyl, C₁-C₆-Halogenalkoxy, Halogen-C₁-C₄-alkoxy-C₁-C₄-alkyl, C₃- C₈-Halogencycloalkyl mit jeweils 1 bis 9 Fluor-, Chlor- und/oder Bromatomen steht,
R⁶ und R⁷ unabhängig voneinander jeweils für Wasserstoff, C₁-C₈-Alkyl, C₁-C₄-Alkoxy-C₁-C₄- alkyl, C₃-C₈-Cycloalkyl; C₁-C₈-Halogenalkyl, Halogen-C₁-C₄-alkoxy-C₁-C₄-alkyl, C₃- C₈-Halogencycloalkyl mit jeweils 1 bis 9 Fluor-, Chlor- und/oder Bromatomen stehen,
R⁶ und R⁷ außerdem gemeinsam mit dem Stickstoffatom, an das sie gebunden sind, einen gege- benenfalls einfach oder mehrfach, gleich oder verschieden durch Halogen oder C₁-C₄- Alkyl substituierten gesättigten Heterocyclus mit 5 bis 8 Ringatomen bilden, wobei der Heterocyclus 1 oder 2 weitere, nicht benachbarte Heteroatome aus der Reihe Sauerstoff, Schwefel oder NR¹⁰ enthalten kann,
R⁸ und R⁹ unabhängig voneinander für Wasserstoff, C₁-C₈-Alkyl, C₃-C₈-Cycloalkyl; C₁-C₈- Halogenalkyl, C₃-C₈-Halogencycloalkyl mit jeweils 1 bis 9 Fluor-, Chlor- und/oder Bromatomen stehen,
R⁸ und R⁹ außerdem gemeinsam mit dem Stickstoffatom, an das sie gebunden sind, einen gege- benenfalls einfach oder mehrfach, gleich oder verschieden durch Halogen oder C₁-C₄- Alkyl substituierten gesättigten Heterocyclus mit 5 bis 8 Ringatomen bilden, wobei der Heterocyclus 1 oder 2 weitere, nicht benachbarte Heteroatome aus der Reihe Sauerstoff, Schwefel oder NR¹⁰ enthalten kann,
R¹⁰ für Wasserstoff oder C₁-C₆-Alkyl steht,
A für den Rest der Formel (A9) 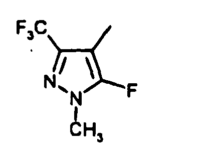
(A9) steht,

2. Silylierte Carboxamide der Formel (I) gemäß Anspruch 1, **dadurch gekennzeichnet, dass**
R für Wasserstoff, Fluor, Chlor, Methyl oder Trifluormethyl steht,
L für eine direkte Bindung oder für jeweils gegebenenfalls durch Halogen substituiertes geradkettiges oder verzweigtes C₁-C₆-Alkylen, C₂-C₆-Alkenylen oder C₂-C₆-Alkinylen steht,
R¹ und R² unabhängig voneinander für C₁-C₆-Alkyl, C₁-C₆-Alkoxy, C₁-C₃-Alkoxy-C₁-C₃-alkyl oder C₁-C₃-Alkylthio-C₁-C₃-alkyl stehen,
R³ für C₁-C₆-Alkyl, C₁-C₆-Alkoxy, C₁-C₃-Alkoxy-C₁-C₃-alkyl, C₁-C₃-Alkylthio-C₁-C₃- alkyl, C₃-C₆-Cycloalkyl, Phenyl oder Benzyl steht,
R⁴ für Wasserstoff, C₁-C₆-Alkyl, C₁-C₄-Alkylsulfinyl, C₁-C₄-Alkylsulfonyl, C₁-C₃-Alkoxy- C₁-C₃-alkyl, C₃-C₆-Cycloalkyl; C₁-C₄-Halogenalkyl, C₁-C₄-Halogenalkylthio, C₁-C₄- Halogenalkylsulfinyl, C₁-C₄₋Halogenalkylsulfonyl, Halogen-C₁-C₃-alkoxy-C₁-C₃-alkyl, C₃-C₈-Halogencycloalkyl mit jeweils 1 bis 9 Fluor-, Chlor- und/oder Bromatomen; Formyl, Formyl-C₁-C₃-alkyl, (C₁-C₃-Alkyl)carbonyl-C₁-C₃-alkyl, (C₁-C₃-Alkoxy)car- bonyl-C₁-C₃-alkyl; Halogen-(C₁-C₃-alkyl)carbonyl-C₁-C₃-alkyl, Halogen-(C₁-C₃-alk- oxy)carbonyl-C₁-C₃-alkyl mit jeweils 1 bis 13 Fluor-, Chlor-und/oder Bromatomen;
R⁵ (C₁-C₆-Alkyl)carbonyl, (C₁-C₄-Alkoxy)carbonyl, (C₁-C₃-Alkoxy-C₁-C₃-alkyl)carbonyl, (C₃-C₆-Cycloalkyl)carbonyl; (C₁-C₄-Halogenalkyl)carbonyl, (C₁-C₄-Halogenalkoxy)car- bonyl, (Halogen-C₁-C₃-alkoxy-C₁-C₃-alkyl)carbonyl, (C₃-C₆-Halogen- cycloalkyl)carbonyl mit jeweils 1 bis 9 Fluor-, Chlor- und/oder Bromatomen; oder -C(=O)C(=O)R³, -CONR⁶R⁷ oder -CH₂NR⁸R⁹ steht, für Wasserstoff, C₁-C₆-Alkyl, C₁-C₄-Alkoxy, C₁-C₃-Alkoxy-C₁-C₃-alkyl, C₃-C₆- Cycloalkyl; C₁-C₄-Halogenalkyl, C₁-C₄-Halogenalkoxy, Halogen-C₁-C₃-alkoxy-C₁-C₃- alkyl, C₃-C₆-Halogencycloalkyl mit jeweils 1 bis 9 Fluor-, Chlor- und/oder Bromatomen steht,
R⁶ und R⁷ unabhängig voneinander jeweils für Wasserstoff, C₁-C₆-Alkyl, C₁-C₃-Alkoxy-C₁-C₃- alkyl, C₃-C₆-Cycloalkyl; C₁-C₄-Halogenalkyl, Halogen-C₁-C₃-alkoxy-C₁-C₃-alkyl, C₃- C₆-Halogencycloalkyl mit jeweils 1 bis 9 Fluor-, Chlor- und/oder Bromatomen stehen,
R⁶ und R⁷ außerdem gemeinsam mit dem Stickstoffatom, an das sie gebunden sind, einen gege- benenfalls einfach bis vierfach, gleich oder verschieden durch Halogen oder C₁-C₄- Alkyl substituierten gesättigten Heterocyclus mit 5 oder 6 Ringatomen bilden, wobei der Heterocyclus 1 oder 2 weitere, nicht benachbarte Heteroatome aus der Reihe Sauerstoff, Schwefel oder NR¹⁰ enthalten kann,
R⁸ und R⁹ unabhängig voneinander für Wasserstoff, C₁-C₆-Alkyl, C₃-C₆-Cycloalkyl; C₁-C₄- Halogenalkyl, C₃-C₆-Halogencycloalkyl mit jeweils 1 bis 9 Fluor-, Chlor- und/oder Bromatomen stehen,
R⁸ und R⁹ außerdem gemeinsam mit dem Stickstoffatom, an das sie gebunden sind, einen gege- benenfalls einfach oder mehrfach, gleich oder verschieden durch Halogen oder C₁-C₄- Alkyl substituierten gesättigten Heterocyclus mit 5 oder 6 Ringatomen bilden, wobei der Heterocyclus 1 oder 2 weitere, nicht benachbarte Heteroatome aus der Reihe Sauerstoff, Schwefel oder NR¹⁰ enthalten kann,
R¹⁰ für Wasserstoff oder C₁-C₄-Alkyl steht,
A für den Rest der Formel (A9) 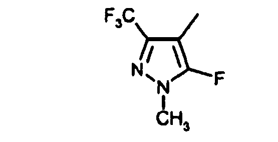
(A9) steht,

3. Verfahren zum Herstellen von silylierten Carboxamiden der Formel (I) gemäß Anspruch 1, **dadurch gekennzeichnet, dass** man
a) Carbonsäure-Derivate der Formel (II) 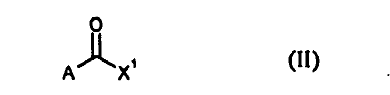 in welcher
X¹ für Halogen oder Hydroxy steht und
A die in Anspruch 1 angegebenen Bedeutungen hat,
mit Aminen der Formel (III) 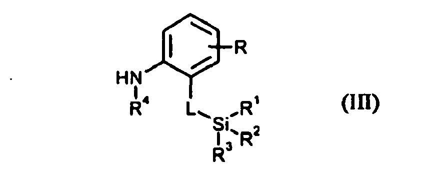 in welcher R, L, R¹, R², R³ und R⁴ die in Anspruch 1 angegebenen Bedeutungen haben, gegebenenfalls in Gegenwart eines Katalysators, gegebenenfalls in Gegenwart eines Kondensationsmittels, gegebenenfalls in Gegenwart eines Säurebindemittels und gegebenenfalls in Gegenwart eines Verdünnungsmittels umsetzt,
oder
b) silylierte Carboxamide der Formel (I-1) 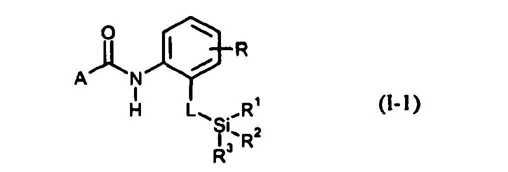 in welcher R, L, R¹, R², R³ und A die in Anspruch 1 angegebenen Bedeutungen haben, mit Halogeniden der Formel (VIII)
R^{4a} - X² (VIII)
in welcher
x² für Chlor, Brom oder Iod steht,
R^{4a} für C₁-C₈-Alkyl, C₁-C₆-Alkylsulfinyl, C₁-C₆-Alkylsulfonyl, C₁-C₄-Alkoxy-C₁- C₄-alkyl, C₃-C₈-Cycloalkyl; C₁-C₆-Halogenalkyl, C₁-C₄-Halogenalkylthio, C₁- C₄-Halogenalkylsulfinyl, C₁-C₄-Halogenalkylsulfonyl, Halogen-C₁-C₄-alkoxy- C₁-C₄-alkyl, C₃-C₈-Halogencycloalkyl mit jeweils 1 bis 9 Fluor-, Chlor- und/oder Bromatomen; Formyl, Formyl-C₁-C₃-alkyl, (C₁-C₃-Alkyl)carbonyl-C₁- C₃-alkyl, (C₁-C₃-Alkoxy)carbonyl-C₁-C₃-alkyl; Halogen-(C₁-C₃-alkyl)carbonyl- C₁-C₃-alkyl, Halogen-(C₁-C₃-alkoxy)carbonyl-C₁-C₃-alkyl mit jeweils 1 bis 13 Fluor-, Chlor- und/oder Bromatomen; (C₁-C₈-Alkyl)carbonyl, (C₁-C₈-Alkoxy)carbonyl, (C₁-C₄-Alkoxy-C₁-C₄-alkyl)- carbonyl, (C₃-C₈-Cycloalkyl)carbonyl; (C₁-C₆-Halogenalkyl)carbonyl, (C₁-C₆- Halogenalkoxy)carbonyl, (Halogen-C₁-C₄-alkoxy-C₁-C₄-alkyl)carbonyl, (C₃-C₈- Halogencycloalkyl)carbonyl mit jeweils 1 bis 9 Fluor-, Chlor- und/oder Brom- atomen; oder -C(=O)C(=O)R⁵, -CONR⁶R⁷ oder -CH₂NR⁸R⁹ steht, wobei R⁵, R⁶, R⁷, R⁸ und R⁹ die in Anspruch 1 angegebenen Bedeutungen haben,
in Gegenwart einer Base und in Gegenwart eines Verdünnungsmittels umsetzt.

4. Mittel zur Bekämpfung unerwünschter Mikroorganismen, **gekennzeichnet durch** einen Gehalt an mindestens einem silylierten Carboxamide der Formel (I) gemäß Anspruch 1 neben Streckmitteln und/oder oberflächenaktiven Stoffen.

5. Verwendung von silylierten Carboxamiden der Formel (I) gemäß Anspruch 1 zur Bekämpfung unerwünschter Mikroorganismen.

6. Verfahren zur Bekämpfung unerwünschter Mikroorganismen, **dadurch gekennzeichnet, dass** man silylierten Carboxamide der Formel (I) gemäß Anspruch 1 auf die Mikroorganismen und/oder deren Lebensraum ausbringt.

7. Verfahren zur Herstellung von Mitteln zur Bekämpfung unerwünschter Mikroorganismen, **dadurch gekennzeichnet, dass** man silylierten Carboxamide der Formel (I) gemäß Anspruch 1 mit Streckmitteln und/oder oberflächenaktiven Stoffen vermischt.

## Claims

1. Silylated carboxamides of the formula (I) 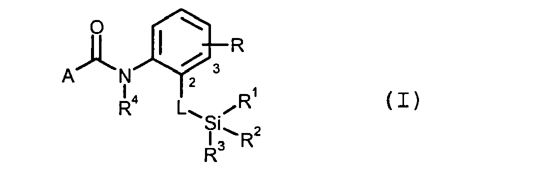 in which
R represents hydrogen, fluorine, chlorine, methyl, isopropyl, methylthio or trifluoro- methyl,
L represents a direct bond or represents in each case optionally substituted straight-chain or branched alkylene (alkanediyl), alkenylene (alkenediyl) or alkynylene (alkyndiyl),
R¹ and R² independently of one another represent hydrogen, C₁-C₈-alkyl, C₁-C₈-alkoxy, C₁-C₄- alkoxy-C₁-C₄-alkyl, C₁-C₄-alkylthio-C₁-C₄-alkyl or C₁-C₆-haloalkyl,
R³ represents hydrogen, C₁-C₈-alkyl, C₁-C₈-alkoxy, C₁-C₄-alkoxy-C₁-C₄-alkyl, C₁-C4-alkylthio-C₁-C₄- alkyl, C₂-C₈-alkenyl, C₂-C₈-alkynyl, C₁-C₆- haloalkyl, C₂-C₆-haloalkenyl, C₂-C₆- haloalkynyl, C₃-C₆-cycloalkyl, or represents in each case optionally substituted phenyl or phenylalkyl,
R⁴ represents hydrogen, C₁-C₈-alkyl, C₁-C₆- alkylsulphinyl, C₁-C₆-alkylsulphonyl, C₁-C₄- alkoxy-C₁-C₄-alkyl, C₃-C₈-cycloalkyl; C₁-C₆- haloalkyl, C₁-C₄-haloalkylthio, C₁-C₄- haloalkylsulphinyl, C₁-C₄-haloalkylsulphonyl, halo-C₁-C₄-alkoxy-C₁-C₄-alkyl, C₃-C₈- halocycloalkyl having in each case 1 to 9 fluorine, chlorine and/or bromine atoms; formyl, formyl-C₁-C₃-alkyl , (C₁-C₃- alkyl)carbonyl-C₁-C₃-alkyl, (C₁-C₃- alkoxy) carbonyl-C₁-C₃-alkyl; halo- (C₁-C₃- alkyl) carbonyl-C₁-C₃-alkyl, halo- (C₁-C₃- alkoxy)carbonyl-C₁-C₃-alkyl having in each case 1 to 13 fluorine, chlorine and/or bromine atoms; (C₁-C₈-alkyl)carbonyl, (C₁-C₈-alkoxy) carbonyl, (C₁-C₄-alkoxy-C₁-C₄-alkyl)carbonyl, (C₃-C₈- cycloalkyl)carbonyl; (C₁-C₆-haloalkyl)carbonyl, (C₁-C₆-haloalkoxy)carbonyl, (halo-C₁-C₄-alkoxy- C₁-C₄-alkyl)carbonyl, (C₃-C₈-halocyclo- alkyl)carbonyl having in each case 1 to 9 fluorine, chlorine and/or bromine atoms; or -C(=O)C(=O)R⁵, -CONR⁶R⁷ or -CH₂NR⁸R⁹,
R⁵ represents hydrogen, C₁-C₈-alkyl, C₁-C₈-alkoxy, C₁-C₄-alkoxy-C₁-C₄-alkyl, C₃-C₈-cycloalkyl; C₁- C₆-haloalkyl, C₁-C₆-haloalkoxy, halo-C₁-C₄- alkoxy-C₁-C₄-alkyl, C₃-C₈-halocycloalkyl having in each case 1 to 9 fluorine, chlorine and/or bromine atoms,
R⁶ and R⁷ independently of one another each represent hydrogen, C₁-C₈-alkyl, C₁-C₄-alkoxy- C₁-C₄-alkyl, C₃-C₈-cycloalkyl; C₁-C₈-haloalkyl, halo-C₁-C₄-alkoxy-C₁-C₄-alkyl, C₃-C₈-
R⁶ halocycloalkyl having in each case 1 to 9 fluorine, chlorine and/or bromine atoms, and R⁷ furthermore together with the nitrogen atom to which they are attached form a saturated heterocycle having 5 to 8 ring atoms which is optionally mono- or polysubstituted by identical or different substituents from the group consisting of halogen and C₁-C₄- alkyl, where the heterocycle may contain 1 or 2 further nonadjacent heteroatoms from the group consisting of oxygen, sulphur and NR¹⁰,
R⁸ and R⁹ independently of one another, represent hydrogen, C₁-C₈-alkyl, C₃-C₈-cycloalkyl; C₁-C₈- haloalkyl, C₃-C₈-halocycloalkyl having in each case 1 to 9 fluorine, chlorine and/or bromine atoms,
R⁸ and R⁹ furthermore together with the nitrogen atom to which they are attached form a saturated heterocycle having 5 to 8 ring atoms which is optionally mono- or polysubstituted by identical or different substituents from the group consisting of halogen and C₁-C₄- alkyl, where the heterocycle may contain 1 or 2 further nonadjacent heteroatoms from the group consisting of oxygen, sulphur and NR¹⁰,
R¹⁰ represents hydrogen or C₁-C₆-alkyl,
A represents the radical of the formula (A9)

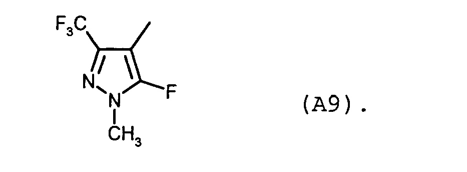

2. Silylated carboxamides of the formula (I) according to Claim 1, **characterized in that**
R represents hydrogen, fluorine, chlorine, methyl or trifluoromethyl,
L represents a direct bond or represents in each case optionally halogen-substituted straight- chain or branched C₁-C₆-alkylene, C₂-C₆- alkenylene or C₂-C₆-alkynylene,
R¹ and R² independently of one another represent C₁- C₆-alkyl, C₁-C₆-alkoxy, C₁-C₃-alkoxy-C₁-C₃-alkyl or C₁-C₃-alkylthio-C₁-C₃-alkyl,
R³ represents C₁-C₆-alkyl, C₁-C₆-alkoxy, C₁-C₃- alkoxy-C₁-C₃-alkyl, C₁-C₃-alkylthio-C₁-C₃-alkyl, C₃-C₆-cycloalkyl, phenyl or benzyl,
R⁴ represents hydrogen, C₁-C₆-alkyl, C₁-C₄- alkylsulphinyl, C₁-C₄-alkylsulphonyl, C₁-C₃- alkoxy-C₁-C₃-alkyl , C₃-C₆-cycloalkyl ; C₁-C₄- haloalkyl, C₁-C₄-haloalkylthio, C₁-C₄- haloalkylsulphinyl, C₁-C₄-haloalkylsulphonyl, halo-C₁-C₃-alkoxy-C₁-C₃-alkyl, C₃-C₈- halocycloalkyl having in each case 1 to 9 fluorine, chlorine and/or bromine atoms; formyl, formyl-C₁-C₃-alkyl, (C₁-C₃- alkyl)carbonyl-C₁-C₃-alkyl, (C₁-C₃- alkoxy)carbonyl-C₁-C₃-alkyl; halo-(C₁-C₃- alkyl)carbonyl-C₁-C₃-alkyl, halo-(C₁-C₃- alkoxy)carbonyl-C₁-C₃-alkyl having in each case 1 to 13 fluorine, chlorine and/or bromine atoms; (C₁-C₆-alkyl) carbonyl, (C₁-C₄-alkoxy)carbonyl, (C₁-C₃-alkoxy-C₁-C₃-alkyl) carbonyl, (C₃-C₆- cycloalkyl)carbonyl; (C₁-C₄-haloalkyl)carbonyl, (C₁-C₄-haloalkoxy) carbonyl, (halo-C₁-C₃-alkoxy-
R⁵ C₁-C₃-alkyl) carbonyl, (C₃-C₆-halo- cycloalkyl)carbonyl having in each case 1 to 9 fluorine, chlorine and/or bromine atoms, or -C(=O)C(=O)R⁵, -CONR⁶R⁷ or -CH₂NR⁸R⁹, represents hydrogen, C₁-C₆-alkyl, C₁-C₄-alkoxy, C₁-C₃-alkoxy-C₁-C₃-alkyl, C₃-C₆-cycloalkyl; C₁- C₄-haloalkyl, C₁-C₄-haloalkoxy, halo-C₁-C₃- alkoxy-C₁-C₃-alkyl, C₃-C₆-halocycloalkyl having in each case 1 to 9 fluorine, chlorine and/or bromine atoms,
R⁶ and R⁷ independently of one another each represent hydrogen, C₁-C₆-alkyl, C₁-C₃-alkoxy- C₁-C₃-alkyl, C₃-C₆-cycloalkyl; C₁-C₄-haloalkyl, halo-C₁-C₃-alkoxy-C₁-C₃-alkyl, C₃-C₆- halocycloalkyl having in each case 1 to 9 fluorine, chlorine and/or bromine atoms,
R⁶ and R⁷ furthermore together with the nitrogen atom to which they are attached form a saturated heterocycle having 5 or 6 ring atoms which is optionally mono- to tetrasubstituted by identical or different substituents from the group consisting of halogen and C₁-C₄- alkyl, where the heterocycle may contain 1 or 2 further non-adjacent heteroatoms from the group consisting of oxygen, sulphur and NR¹⁰,
R⁸ and R⁹ independently of one another represent hydrogen, C₁-C₆-alkyl, C₃-C₆-cycloalkyl; C₁-C₄- haloalkyl, C₃-C₆-halocycloalkyl having in each case 1 to 9 fluorine, chlorine and/or bromine atoms,
R⁸ and R⁹ furthermore together with the nitrogen atom to which they are attached form a saturated heterocycle having 5 or 6 ring atoms which is optionally mono- or polysubstituted by identical or different substituents from the group consisting of halogen and C₁-C₄- alkyl, where the heterocycle may contain 1 or 2 further non-adjacent heteroatoms from the group consisting of oxygen, sulphur and NR¹⁰,
R¹⁰ represents hydrogen or C₁-C₄-alkyl,
A represents the radical of the formula (A9)

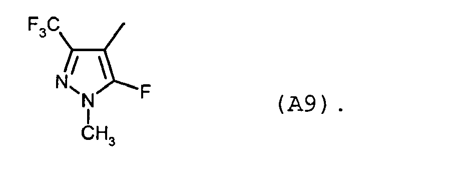

3. Process for preparing silylated carboxamides of the formula (I) according to Claim 1, **characterized in that**
a) carboxylic acid derivatives of the formula (II) 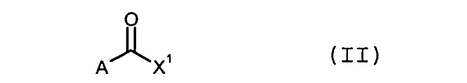 in which
X¹ represents halogen or hydroxyl and
A is as defined in Claim 1
are reacted with amines of the formula (III) 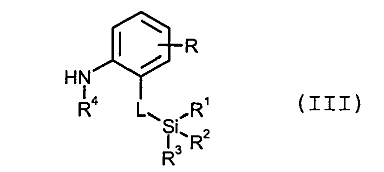 in which R, L, R¹, R², R³ and R⁴ are as defined in Claim 1,
if appropriate in the presence of a catalyst, if appropriate in the presence of a condensing agent, if appropriate in the presence of an acid binder and if appropriate in the presence of a diluent,
or
b) silylated carboxamides of the formula (I-1) 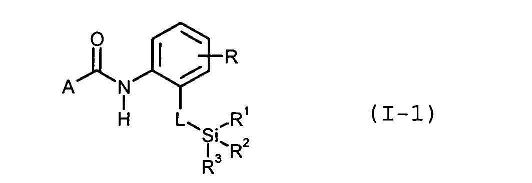 in which R, L, R¹, R², R³ and A are as defined in Claim 1,
are reacted with halides of the formula (VIII) R^{4a}-X²
R^{4a}-X² (VIII)
in which
X² represents chlorine, bromine or iodine,
R^{4a} represents C₁-C₈-alkyl, C₁-C₆- alkylsulphinyl, C₁-C₆-alkylsulphonyl, C₁- C₄-alkoxy-C₁-C₄-alkyl, C₃-C₈-cycloalkyl; C₁-C₆-haloalkyl, C₁-C₄-haloalkylthio, C₁- C₄-haloalkylsulphinyl, C₁-C₄- haloalkylsulphonyl, halo-C₁-C₄-alkoxy-C₁- C₄-alkyl, C₃-C₈-halocycloalkyl having in each case 1 to 9 fluorine, chlorine and/or bromine atoms; formyl, formyl-C₁- C₃-alkyl, (C₁-C₃-alkyl)carbonyl-C₁-C₃- alkyl, (C₁-C₃-alkoxy)carbonyl-C₁-C₃-alkyl; halo- (C₁-C₃-alkyl)carbonyl-C₁-C₃-alkyl, halo-(C₁-C₃-alkoxy) carbonyl-C₁-C₃-alkyl having in each case 1 to 13 fluorine, chlorine and/or bromine atoms; (C₁-C₈-alkyl) carbonyl, (C₁-C₈- alkoxy)carbonyl, (C₁-C₄-alkoxy-C₁-C₄- alkyl)carbonyl, (C₃-C₈- cycloalkyl)carbonyl; (C₁-C₆-haloalkyl)carbonyl, (C₁-C₆-haloalkoxy)carbonyl, (halo-C₁-C₄-alkoxy-C₁-C₄-alkyl) carbonyl, (C₃-C₈-halocycloalkyl)carbonyl having in each case 1 to 9 fluorine, chlorine and/or bromine atoms ; or -C(=O)C(=O)R⁵, -CONR⁶R⁷ or -CH₂NR⁸R⁹ , where R⁵, R⁶, R⁷, R⁸ and R⁹ are as defined in Claim 1,
in the presence of a base and in the presence of a diluent.

4. Compositions for controlling unwanted microorganisms, **characterized in that** they comprise at least one silylated carboxamide of the formula (I) according to Claim 1, in addition to extenders and/or surfactants.

5. Use of silylated carboxamides of the formula (I) according to Claim 1 for controlling unwanted microorganisms.

6. Method for controlling unwanted microorganisms, **characterized in that** silylated carboxamides of the formula (I) according to Claim 1 are applied to the microorganisms and/or their habitat.

7. Process for preparing compositions for controlling unwanted microorganisms, **characterized in that** silylated carboxamides of the formula (I) according to Claim 1 are mixed with extenders and/or surfactants.

## Revendications

1. Carboxamides silylés de formule (I) 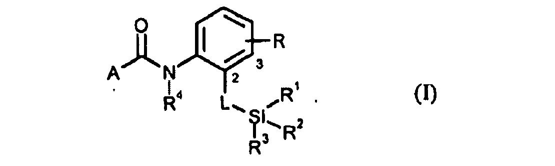 dans laquelle
R est un atome d'hydrogène, un groupe fluoro, chloro, méthyle, isopropyle, méthylthio ou trifluorométhyle,
L est une liaison simple, ou représente un radical alkylène (alcanediyle), alcénylène (alcènediyle) ou alcinylène (alcinyediyle) à chaîne droite ou ramifiée, chacun étant éventuellement substitué,
R¹ et R² représentent chacun indépendamment de l'autre un atome d'hydrogène, un groupe alkyle en C₁-C₈, alcoxy en C₁-C₈, (alcoxy en C₁-C₄)-(alkyle en C₁-C₄), (alkylthio en C₁-C₄)-(alkyle en C₁-C₄) ou halogènalkyle en C₁-C₆,
R³ est un atome d'hydrogène, un groupe alkyle en C₁-C₈, alcoxy en C₁-C₈, (alcoxy en C₁-C₄)-(alkyle en C₁-C₄), (alkylthio en C₁-C₄)-(alkyle en C₁-C₄), alcényle en C₂-C₈, alcynyle en C₂-C₈ ; halogènalkyle en C₁-C₆, halogènalcényle en C₂-C₆, halogènalcynyle en C₂-C₆, cycloalkyle en C₃-C₆, ou un groupe phényle ou phénylalkyle, chacun étant éventuellement substitué,
R⁴ est un atome d'hydrogène, un groupe alkyle en C₁-C₈, alkylsulfinyle en C₁₋C₆, alkylsulfonyle en C₁-C₆, (alcoxy en C₁-C₄)(alkyle en C₁-C₄), cycloalkyle en C₃-C₈ ; halogènalkyle en C₁-C₆, halogènalkylthio en C₁-C₄, halogènalkylsulfinyle en C₁-C₄, halogènalkylsulfonyle en C₁-C₄, halogéno(alcoxy en C₁-C₄)-(alkyle en C₁-C₄), halogénocycloalkyle en C₃-C₈, ayant chacun de 1 à 9 atomes de fluor, de chlore et/ou de brome ; formyle, formyl(alkyle en C₁-C₃), (alkyle en C₁-C₃)carbonyl(alkyle en C₁-C₃), (alcoxy en C₁-C₃)carbonyl(alkyle en C₁-C₃), halogéno(alkyle en C₁-C₃)carbonyl(alkyle en C₁-C₃), halogéno(alcoxy en C₁-C₃)carbonyl(alkyle en C₁-C₃), chacun ayant de 1 à 13 atomes de fluor, de chlore et/ou de brome ; (alkyle en C₁-C₈)carbonyle, (alcoxy en C₁-C₈)carbonyle, ((alcoxy en C₁-C₄)-(alkyle en C₁-C₄))carbonyle, (cycloalkyle en C₃-C₈)carbonyle, (halogènalkyle en C₁-C₆)carbonyle, (halogènalcoxy en C₁-C₆)carbonyle, ((halogéno(alcoxy en C₁-C₄)-(alkyle en C₁-C₄))carbonyle, (halogéno-cycloalkyle en C₃-C₈)carbonyle, chacun ayant 1 à 9 atomes de fluor, de chlore et/ou de brome ; ou -C=O)C(=O)R⁵, -CONR⁶R⁷ ou -CH₂NR⁸R⁹,
R⁵ est un atome d'hydrogène, un groupe alkyle en C₁-C₈, alcoxy en C₁-C₈, (alcoxy en C₁-C₄)(alkyle en C₁-C₄), cycloalkyle en C₃-C₈, halogènalkyle en C₁-C₆, halogènalcoxy en C₁-C₆, halogéno(alcoxy en C₁-C₄)-(alkyle en C₁-C₄), halogénocycloalkyle en C₃-C₈, chacun ayant de 1 à 9 atomes de fluor, de chlore et/ou de brome,
R⁶ et R⁷ représentent chacun indépendamment de l'autre un atome d'hydrogène, un groupe alkyle en C₁-C₈, (alcoxy en C₁-C₄)-(alkyle en C₁-C₄), cycloalkyle en C₃-C₈, halogènalkyle en C₁-C₈, halogéno(alcoxy en C₁-C₄)-(alkyle en C₁-C₄), halogénocycloalkyle en C₃-C₈, chacun ayant 1 à 9 atomes de fluor, de chlore et/ou de brome,
R⁶ et R⁷ représentent par ailleurs, avec l'atome d'azote auquel ils sont liés, un radical hétérocyclique saturé éventuellement une ou plusieurs fois substitué par des substituants halogéno ou alkyle en C₁-C₄ identiques ou différents, ayant 5 à 8 atomes nucléaires, le radical hétérocyclique pouvant contenir 1 ou 2 hétéroatomes supplémentaires non voisins choisis dans la série comprenant l'oxygène, le soufre ou NR¹⁰,
R⁸ et R⁹ représentent chacun indépendamment de l'autre un atome d'hydrogène, un groupe alkyle en C₁-C₈, cycloalkyle en C₃-C₈, halogènalkyle en C₁-C₈, halogénocycloalkyle en C₃-C₈, chacun ayant 1 à 9 atomes de fluor, de chlore ou de brome,
R⁸ et R⁹ représentent par ailleurs, avec l'atome d'azote auquel ils sont liés, un radical hétérocyclique saturé éventuellement une ou plusieurs fois substitué par des substituants halogéno ou alkyle en C₁-C₄ identiques ou différents, ayant 5 à 8 atomes nucléaires, le radical hétérocyclique pouvant contenir 1 ou 2 hétéroatomes supplémentaires non voisins choisis dans la série comprenant l'oxygène, le soufre ou NR¹⁰,
R¹⁰ représente un atome d'hydrogène ou un groupe alkyle en C₁-C₆,
A est le radical de formule (A9)

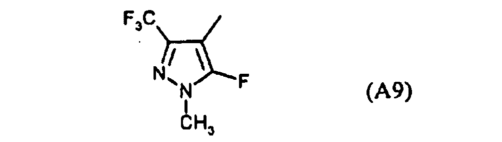

2. Carboxamides silylés de formule (I) selon la revendication 1, **caractérisés en ce que**
R est un atome d'hydrogène, le groupe fluoro, chloro, méthyle ou trifluorométhyle,
L est une liaison simple ou un groupe alkylène en C₁-C₆, alcénylène en C₂-C₆ ou alcynylène en C₂-C₆ à chaîne droite ou ramifiée, chacun étant éventuellement substitué par un ou des substituants halogéno,
R¹ et R² représentent chacun indépendamment de l'autre un groupe alkyle en C₁-C₆, alcoxy en C₁-C₆, (alcoxy en C₁-C₃)-(alkyle en C₁-C₃), ou (alkylthio en C1-C₃)-(alkyle en C₁-C₃),
R³ est un groupe alkyle en C₁-C₆, alcoxy en C₁-C₆, (alcoxy en C₁-C₃)-(alkyle en C₁-C₃), (alkylthio en C₁-C₃)(alkyle en C₁-C₃), cycloalkyle en C₃-C₆, phényle ou benzyle,
R⁴ est un atome d'hydrogène, un groupe alkyle en C₁-C₆, alkylsulfinyle en C₁-C₄, alkylsulfonyle en C₁-C₄, (alcoxy en C₁-C₃)-(alkyle en C₁-C₃), cycloalkyle en C₃-C₆ ; halogènalkyle en C₁-C₄, halogènalkylthio en C₁-C₄, halogènalkylsulfinyle en C₁-C₄, halogènalkylsulfonyle en C₁-C₄, halogéno(alcoxy en C₁-C₃)-(alkyle en C₁-C₃), halogénocycloalkyle en C₃-C₈, chacun ayant 1 à 9 atomes de fluor, de chlore et/ou de brome ; formyle, formyl(alkyle en C₁-C₃), (alcoxy en C₁-C₃)carbonyl(alkyle en C₁-C₃), (alcoxy en C₁-C₃)carbonyl(alkyle en C₁-C₃) ; halogéno(alkyle en C₁-C₃)carbonyl(alkyle en C₁-C₃), halogéno(alcoxy en C₁-C₃)carbonyle-(alkyle en C₁-C₃), chacun ayant 1 à 13 atomes de fluor, de chlore ou de brome ; (alkyle en C₁-C₆)-carbonyle, (alcoxy en C₁-C₄)carbonyle, ((alcoxy en C₁-C₃)(alkyle en C₁-C₃))carbonyle, (cycloalkyle en C₃-C₆)-carbonyle ; (halogènalkyle en C₁-C₄)carbonyle, (halogènalcoxy en C₁-C₄)carbonyle, ((halogéno(alcoxy en C₁-C₃)-(alkyle en C₁-C₃))carbonyle, (halogénocycloalkyle en C₃-C₆)carbonyle, chacun ayant 1 à 9 atomes de fluor, de chlore ou de brome ; ou -C=O)C(=O)R⁵, -CONR⁶R⁷ ou -CH₂NR⁸R⁹,
R⁵ est un atome d'hydrogène, un groupe alkyle en C₁-C₆, alcoxy en C₁-C₄, (alcoxy en C₁-C₃)-(alkyle en C₁-C₃), cycloalkyle en C₃-C₆ ; halogènalkyle en C₁-C₄, halogènalcoxy en C₁-C₄, halogéno(alcoxy en C₁-C₃)-(alkyle en C₁-C₃), halogénocycloalkyle en C₃-C₆, chacun ayant 1 à 9 atomes de fluor, de chlore ou de brome,
R⁶ et R⁷ représentent chacun indépendamment de l'autre un atome d'hydrogène, un groupe alkyle en C₁-C₆, (alcoxy en C₁-C₃)-(alkyle en C₁-C₃), cycloalkyle en C₃-C₆ ; halogènalkyle en C₁-C₄, halogéno(alcoxy en C₁-C₃)(alkyle en C₁-C₃), halogénocycloalkyle en C₃-C₆, chacun ayant 1 à 9 atomes de fluor, de chlore ou de brome,
R⁶ et R⁷ représentent par ailleurs, avec l'atome d'azote auquel ils sont liés, un radical hétérocyclique saturé éventuellement une ou plusieurs fois substitué par des substituants halogéno ou alkyle en C₁-C₄ identiques ou différents, ayant 5 ou 6 atomes nucléaires, le radical hétérocyclique pouvant contenir 1 ou 2 hétéroatomes supplémentaires non voisins choisis dans la série comprenant l'oxygène, le soufre ou NR¹⁰,
R⁸ et R⁹ représentent chacun indépendamment de l'autre un atome d'hydrogène, un groupe alkyle en C₁-C₆, cycloalkyle en C₃-C₆ ; halogènalkyle en C₁-C₄, halogéno-cycloalkyle en C₃-C₆, chacun ayant 1 à 9 atomes de fluor, de chlore ou de brome,
R⁸ et R⁹ représentent par ailleurs, avec l'atome d'azote auquel ils sont liés, un radical hétérocyclique saturé éventuellement une ou plusieurs fois substitué par des substituants halogéno ou alkyle en C₁-C₄ identiques ou différents, ayant 5 ou 6 atomes nucléaires, le radical hétérocyclique pouvant contenir 1 ou 2 hétéroatomes supplémentaires non voisins choisis dans la série comprenant l'oxygène, le soufre ou NR¹⁰,
R¹⁰ est un atome d'hydrogène ou un groupe alkyle en C₁-C₄,
A est le radical (A9)

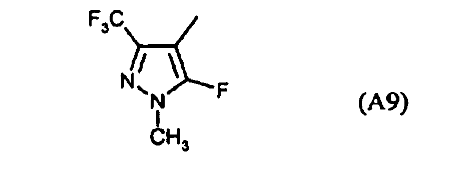

3. Procédé de préparation de carboxamides silylés de formule (I) selon la revendication 1, **caractérisé en ce que**
a) on fait réagir des dérivés d'un acide carboxylique de formule (II) 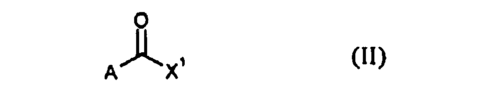 dans laquelle
X¹ est un halogène ou un groupe hydroxy, et A a les significations données dans la revendication 1, avec des amines de formule (III) 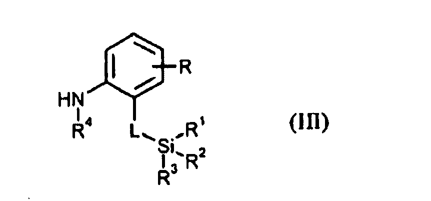 dans laquelle R, L, R¹, R², R³ et R⁴ ont les significations données dans la revendication 1, éventuellement en présence d'un catalyseur, éventuellement en présence d'un agent de condensation, éventuellement en présence d'un agent liant les acides et éventuellement en présence d'un agent diluant,
ou
b) on fait réagir des carboxamides silylés de formule (I-1) 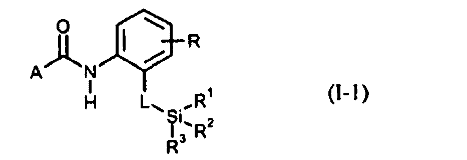 dans laquelle R, L, R¹, R², R³ et A ont les significations données dans la revendication 1,
avec des halogénures de formule (VIII)
R^{4A} ₋ X² (VIII)
dans laquelle
X² représente le chlore, le brome ou l'iode,
R^{4A} est un groupe alkyle en C₁-C₈, alkylsulfinyle en C₁-C₆, alkylsulfonyle en C₁-C6, (alcoxy en C₁-C₄)(alkyle en C₁-C₄), cycloalkyle en C₃-C₈ ; halogènalkyle en C₁-C₆, halogènalkylthio en C₁-C₄, halogènalkylsulfinyle en C₁-C₄, halogènalkylsulfonyle en C₁-C₄, halogéno(alcoxy en C₁-C₄)-(alkyle en C₁-C₄), halogénocycloalkyle en C₃-C₈, ayant chacun de 1 à 9 atomes de fluor, de chlore et/ou de brome ; formyle, formyl(alkyle en C₁-C₃), (alkyle en C₁-C₃)carbonyl-(alkyle en C₁-C₃), (alcoxy en C₁-C₃)carbonyl(alkyle en C₁-C₃), halogéno(alkyle en C₁-C₃)carbonyl(alkyle en C₁-C₃), halogéno(alcoxy en C₁-C₃)carbonyl(alkyle en C₁-C₃), chacun ayant de 1 à 13 atomes de fluor, de chlore et/ou de brome ; (alkyle en C₁-C₈)carbonyle, (alcoxy en C₁-C₈)carbonyle, ((alcoxy en C₁-C₄)-(alkyle en C₁-C₄))carbonyle, (cycloalkyle en C₃-C₈)carbonyle ; (halogènalkyle en C₁-C₆)carbonyle, (halogènalcoxy en C₁-C₆)carbonyle, ((halogéno(alcoxy en C₁-C₄)-(alkyle en C₁-C₄))carbonyle, (halogénocycloalkyle en C₃-C₈)carbonyle, chacun ayant 1 à 9 atomes de fluor, de chlore et/ou de brome ; ou -C=O)C(=O)R⁵, -CONR⁶R⁷ ou -CH₂NR⁸R⁹_{,} où R⁵, R⁶, R⁷, R⁸ et R⁹ ont les significations données dans la revendication 1,
en présence d'une base et en présence d'un agent diluant.

4. Produit pour lutter contre les microorganismes indésirables, **caractérisé en ce qu'**il contient au moins un carboxamide silylé de formule (I) selon la revendication 1, outre des diluants et/ou des substances tensioactives.

5. Utilisation de carboxamides silylés de formule (I) selon la revendication 1 pour lutter contre des microorganismes indésirables.

6. Procédé de lutte contre les microorganismes indésirables, **caractérisé en ce qu'**on répand sur les microorganismes et/ou leur habitus des carboxamides silylés de formule (I) selon la revendication 1.

7. Procédé de préparation de produits pour lutter contre des microorganismes indésirables, **caractérisé en ce qu'**on mélange des carboxamides silylés de formule (I) selon la revendication 1 avec des diluants et/ou des substances tensioactives.
